# EUROPÄISCHE PATENTSCHRIFT

(11) **EP 3 270 733 B1**
(45) Veröffentlichungstag und Bekanntmachung des Hinweises auf die Patenterteilung: **08.05.2019**
(21) Anmeldenummer: 16709801.1
(22) Anmeldetag: 14.03.2016
(51) Int. Cl.: A47C 1/032, A47C 3/026, A47C 7/44, A47C 31/12

(54) **MECHANIKBAUGRUPPE FÜR EINEN STUHL UND STUHL MIT EINER DERARTIGEN MECHANIKBAUGRUPPE**
MECHANICAL ASSEMBLY FOR A CHAIR AND CHAIR WITH SUCH A MECHANICAL ASSEMBLY
ENSEMBLE MÉCANIQUE DESTINÉ À UNE CHAISE ET CHAISE MUNIE DUDIT ENSEMBLE MÉCANIQUE

(30) Priorität: 14.03.2015 DE 102015003156; 13.11.2015 DE 102015119689
(43) Veröffentlichungstag der Anmeldung: 24.01.2018
(73) Patentinhaber: Herman Miller, Inc., Zeeland, MI 49464 (US)
(72) Erfinder: SCHMITZ, Johann Burkhard, 10587 Berlin (DE); ZWICK, Carola Eva Marianne, 10587 Berlin (DE); ZWICK, Roland Rolf Otto, 10587 Berlin (DE)
(74) Vertreter: Boult Wade Tennant LLP
(86) Internationale Anmeldenummer: PCT/EP2016/055450
(87) Internationale Veröffentlichungsnummer: WO 2016/146582

(56) Entgegenhaltungen:
- WO-A2-2007/110732
- DE-A1-102013 005 861
- DE-C1- 4 208 648
- US-A- 5 348 372
- US-A1- 2006 202 530

## Beschreibung

Die Erfindung betrifft Mechanikbaugruppen für einen Stuhl und einen Stuhl mit einer derartigen Mechanikbaugruppe.

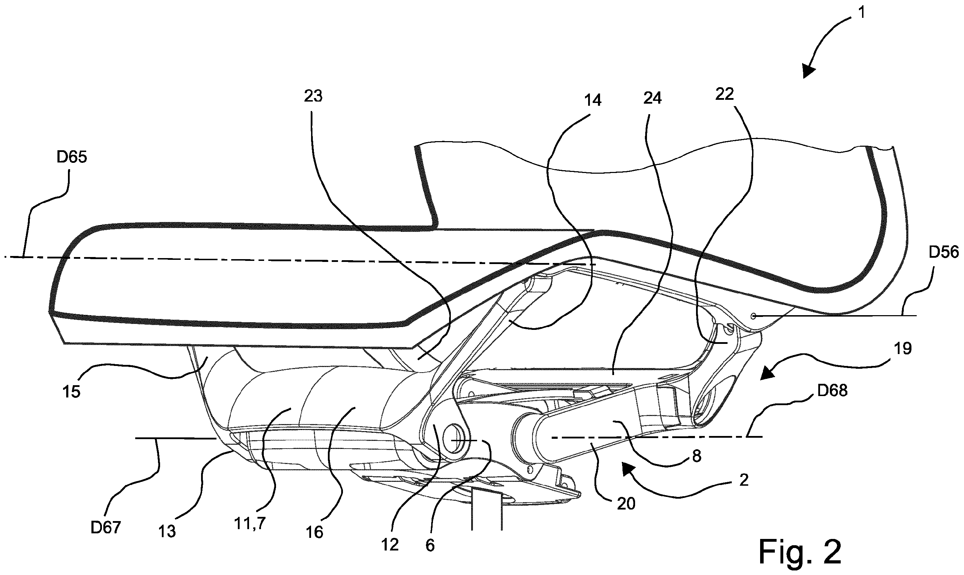

Aus der WO 2007/110732 A2 ist eine Mechanikbaugruppe für einen Stuhl bzw. ein Stuhl mit einer derartigen Mechanikbaugruppe bekannt. Die dortigen Figuren 2a und 2b offenbaren eine Mechanikbaugruppe für einen Stuhl, wobei an die Mechanikbaugruppe ein Fußelement, ein Rückenelement und ein Sitzelement anlenkbar sind, wobei das Rückenelement und das Sitzelement eine Sitzschale bilden, wobei die Mechanikbaugruppe einen Träger, einen vorderen Schwingarm und eine hinteren Schwingarm umfasst, wobei der vordere Schwingarm schwenkbar an dem Träger angelenkt und mit dem Sitzelement verbunden ist, wobei der hintere Schwingarm schwenkbar an dem Träger angelenkt ist und mit der Sitzschale verbunden ist, wobei die Mechanikbaugruppe zur Kompensation eines Körpergewichts einer sitzenden Person wenigstens eine Blattfeder umfasst, wobei die Mechanikbaugruppe weiterhin wenigstens ein verstellbares Auflager, einen Verstellmechanismus für das Auflager bzw. die Auflager und wenigstens eine Fahrbahn für das bzw. die Auflager umfasst, wobei die Blattfeder bzw. die Blattfedern jeweils mit einem ersten Endbereich an dem Träger fixiert ist bzw. sind, außerhalb des Endbereichs jeweils auf dem Auflager bzw. den Auflagern aufliegt bzw. aufliegen und außerhalb des Endbereichs jeweils die Sitzschale abstützt bzw. abstützen.

Es ist Aufgabe der Erfindung, eine Mechanikbaugruppe für einen Stuhl bzw. einen Stuhl mit einer derartigen Mechanikbaugruppe vorzuschlagen, durch welche bzw. durch welchen eine verbesserte, insbesondere feinere oder leichtgängigere Abstimmung bzw. Anpassung auf das Körpergewicht einer Person ermöglicht ist.

Diese Aufgabe wird ausgehend von den Merkmalen des Oberbegriffs des Anspruchs 1 gelöst. In den Unteransprüchen sind vorteilhafte und zweckmäßige Weiterbildungen angegeben.

Im Sinne der Erfindung umfasst eine Sitzschale ein Sitzelement und ein Rückenelement. Hierbei ist es sowohl vorgesehen die Sitzschale einteilig auszubilden, so dass das Sitzelement mit dem Rückenelement durch ein Verbindungsmittel wie insbesondere wenigstens ein Verbindungsgelenk oder wenigstens ein elastisches Verbindungselement verbunden ist, als auch vorgesehen ist, dass das Sitzelement und das Rückelement nur indirekt über die Mechanikbaugruppe miteinander verbunden sind.

Weitere Einzelheiten der Erfindung werden in der Zeichnung anhand von schematisch dargestellten Ausführungsbeispielen beschreiben.

Hierbei zeigt:
Figur 1: eine perspektivische Seitenansicht eines erfindungsgemäßen Stuhls mit einer erfindungsgemäßen Mechanikbaugruppe;
Figur 2: eine Detailansicht der Figur 1;
Figur 3: eine Seitenansicht der Figur 1;
Figur 4: eine Detailansicht der Figur 3;
Figur 5: eine perspektivische Ansicht der Mechanikbaugruppe des Stuhls;
Figur 6: die Darstellung der Figur 5 bei ausgeblendeten Blattfedern;
Figur 7: eine Seitenansicht der Figur 6 entsprechend der dort gezeigten Pfeilrichtung VII;
Figur 8: die Darstellung der Figur 7 bei ausgeblendeten Blattfedern;
Figur 9: eine geschnittene Seitenansicht der Mechanikbaugruppe;
Figur 10: eine weitere perspektivische Ansicht der Mechanikbaugruppe;
Figur 11: die Darstellung der Figur 10 bei ausgeblendetem Träger und ausgeblendeter hinterem Schwingarm;
Figur 12 bis 14: geschnittene Seitenansichten der Mechanikbaugruppe in unbelasteter, leicht belasteter und starkbelasteter Stellung des Trägers;
Figur 15: eine Draufsicht auf die Mechanikbaugruppe;
Figur 16: eine Draufsicht auf die Darstellung der Figur 15 bei herausgenommenen Blattfedern;
Figur 17: eine weitere perspektivische Darstellung der Mechanikbaugruppe;
Figur 18 und 19: die Darstellung der Figur 17 bei teilweise ausgeblendeten Bauteilen
Figur 20 bis 22: eine zweite bis vierte Ausführungsvariante zu der in den Figuren 1 bis 19 gezeigten ersten Ausführungsvariante einer erfindungsgemäßen Mechanikbaugruppe eines Stuhls;
Figur 23 bis 29: verschiedene Ansichten einer fünften Ausführungsvariante einer Mechanikbaugruppe eines Stuhls und
Figur 30, 31: schematische Darstellungen zur weiteren Erläuterung der in den Figuren 1 bis 19 gezeigten ersten Ausführungsvariante der Mechanikbaugruppe.

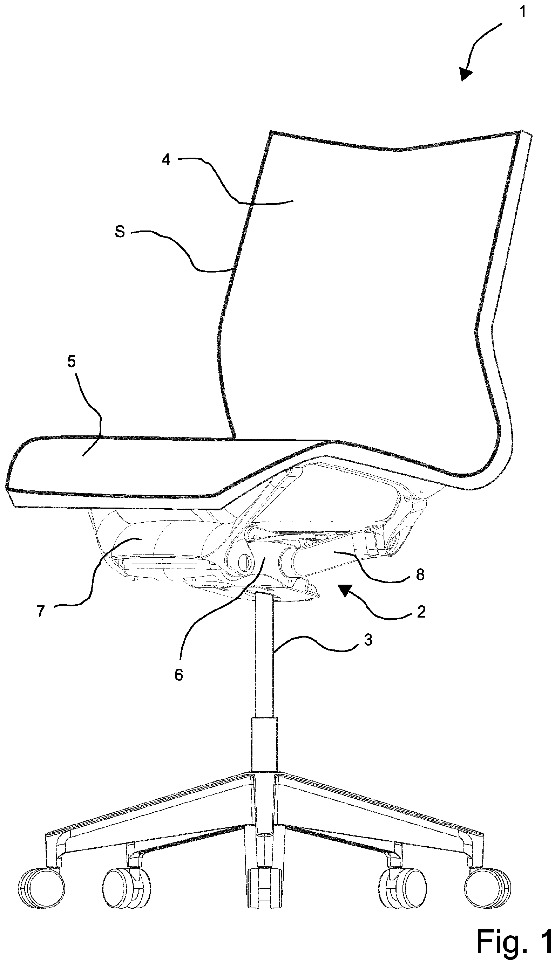

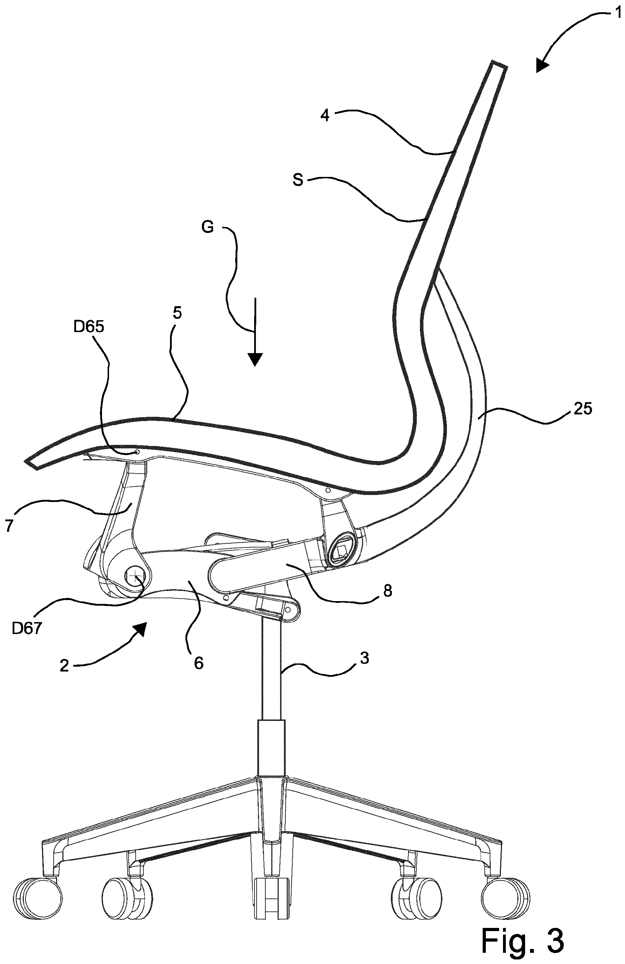

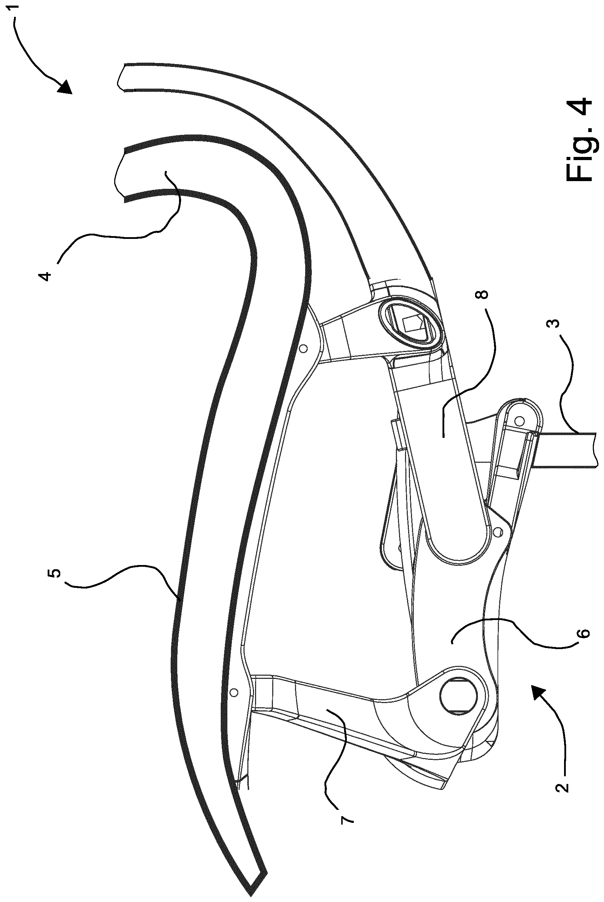

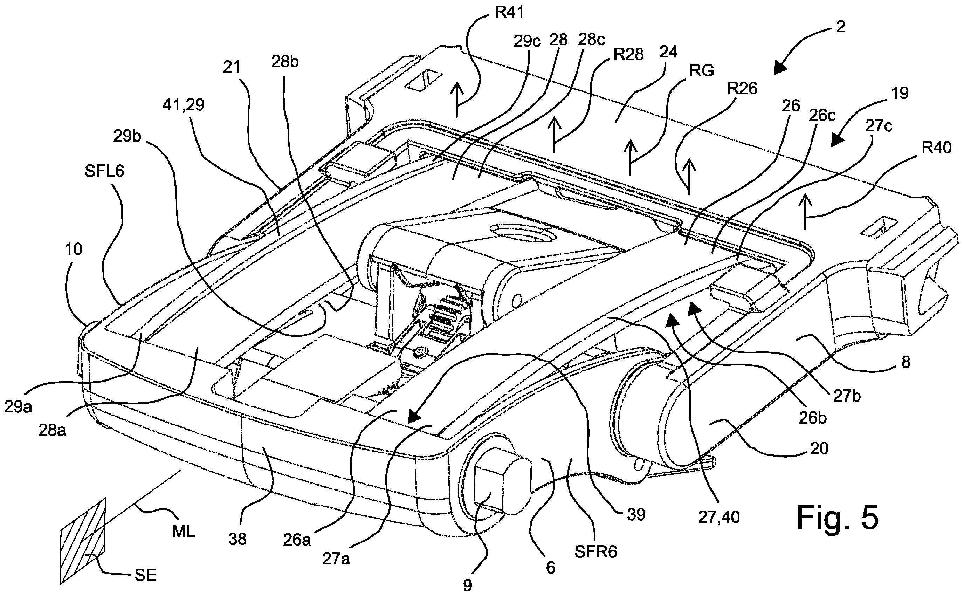

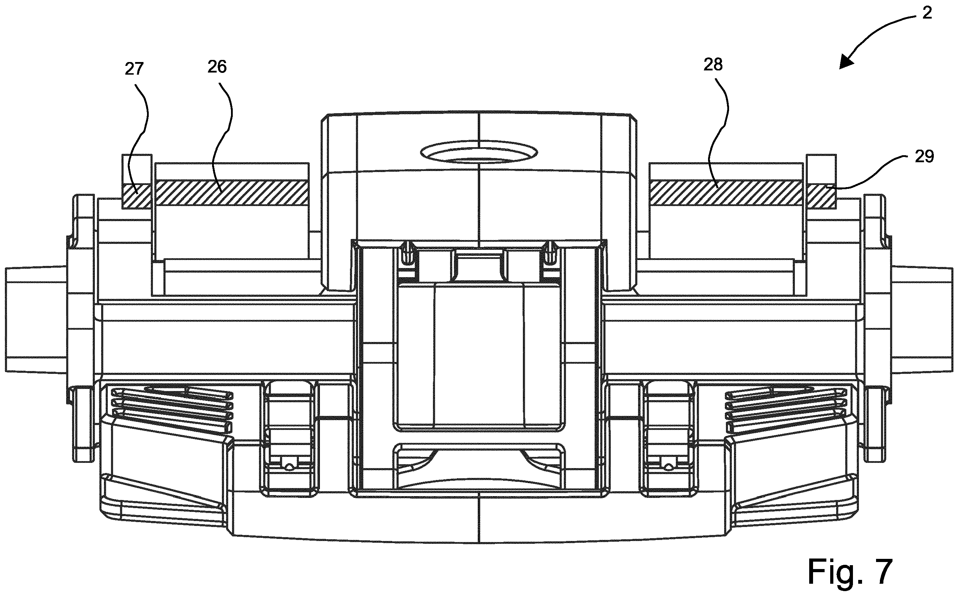

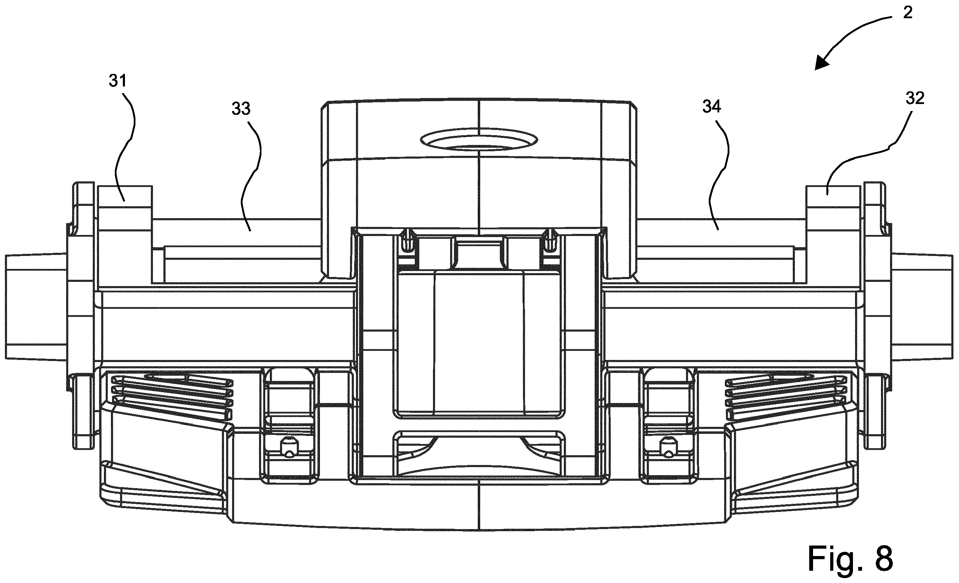

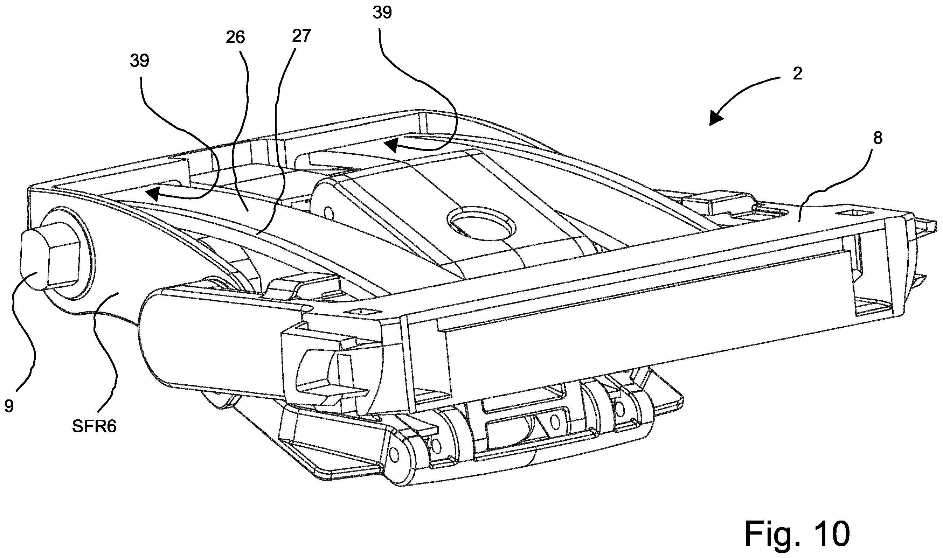

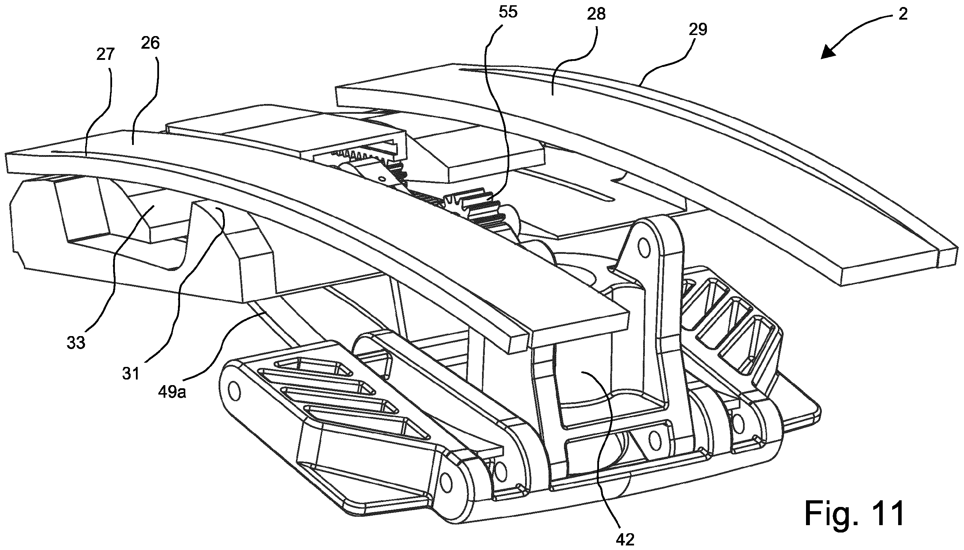

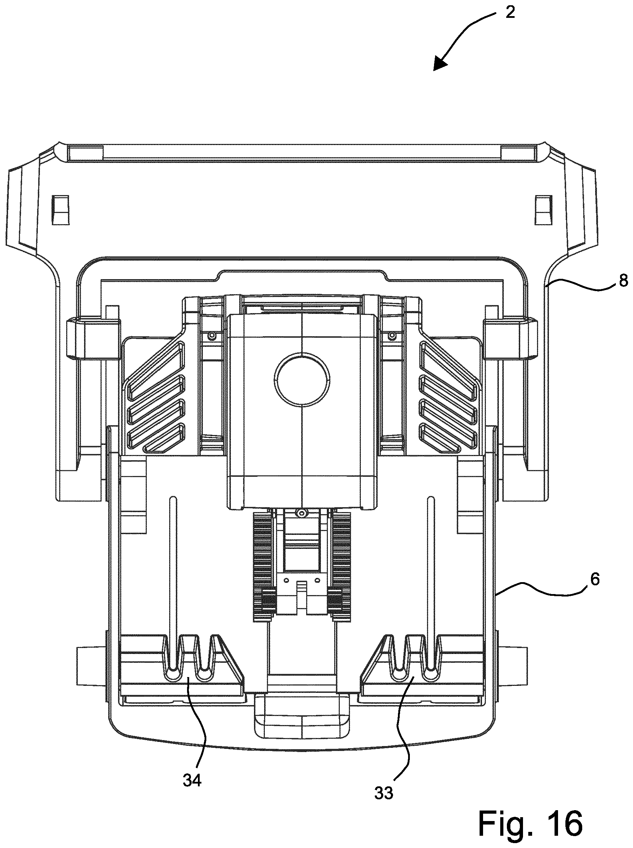

In der Figur 1 ist ein erfindungsgemäßer Stuhl 1 mit einer erfindungsgemäßen Mechanikbaugruppe 2 in perspektivischer Seitenansicht dargestellt. Die Figur 2 zeigt die Mechanikbaugruppe 2. Die Figur 3 zweigt den in der Figur 1 dargestellten Stuhl 1 in Seitenansicht von rechts und die Figur 4 zeigt die Mechanikbaugruppe 2 nochmals in vergrößerter Darstellung, aber aus der Seitenansicht entsprechend der Figur 3. In den Figuren 5 bis 19 ist die aus den Figuren 1 bis 4 bekannte Mechanikbaugruppe 2 in weiteren Ansichten dargestellt, wobei zur besseren Darstellung einzelner Bauteile teilweise Bauteile ausgeblendet sind.

An die Mechanikbaugruppe 2 für den Stuhl 1, wie diese insbesondere in den Figuren 1 bis 6 gezeigt ist, sind ein Fußelement 3, ein Rückenelement 4 und ein Sitzelement 5 anlenkbar. Hierbei bilden das Rückenelement 4 und das Sitzelement 5 eine Sitzschale S. Die Mechanikbaugruppe 2 umfasst einen Träger 6, einen vorderen Schwingarm 7, welcher nur in den Figuren 1 bis 4 gezeigt ist und einen hinteren Schwingarm 8, welcher ab Figur 5 allenfalls abgeschnitten dargestellt ist.

Der vordere Schwingarm 7 ist schwenkbar um eine Drehachse D67 an dem Träger 6 angelenkt und schwenkbar um eine Drehachse D65 mit dem Sitzelement 5 verbunden, wobei hierzu an einer rechten Seitenwand SFR6 des Trägers 6 und an einer linken Seitenwand SFL6 des Trägers 6 an dem Träger 6 Achszapfen 9, 10 ausgebildet sind, in welche der vordere Schwingarm 7 eingehängt ist (vgl. z.B. Fig. 1 bis 4). Der vordere Schwingarm 7 ist als H-artiger Bügel 11 ausgebildet (siehe insbesondere Figur 2), welcher vier Schenkel 12, 13, 14 und 15 und eine Querverbindung 16 umfasst. Hierbei sind der erste und der zweite Schenkel 12, 13 mit dem Träger 6 verbunden und hierbei sind die Schenkel 14, 15 mit dem Sitzelement 5 verbunden.

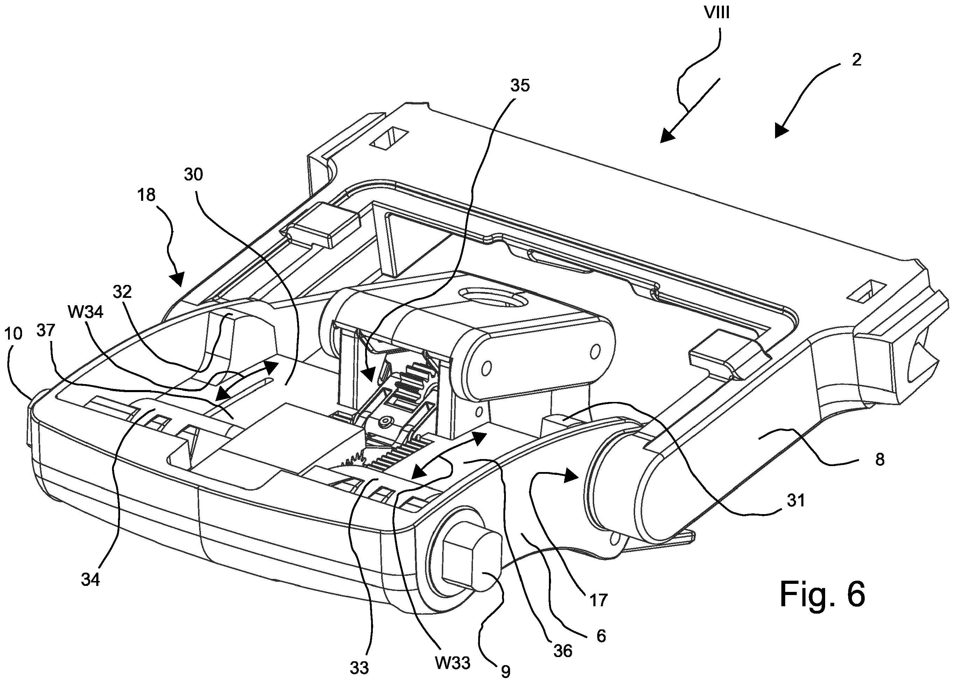

Der hintere Schwingarm 8 (siehe insbesondere Figur 2) ist schwenkbar um eine Drehachse D68 an dem Träger 6 angelenkt und mit der Sitzschale S verbunden, wobei der Träger 6 schwenkbar um eine Drehachse D56 mit dem Sitzelement 5 verbunden ist. Hierzu sind an der rechten Seitenwand SFR6 des Trägers 5 und an der linken Seitenwand SFL6 des Trägers 6 an dem Träger 6 Achszapfen 17, 18 ausgebildet (siehe Figur 6), in welche der hintere Schwingarm 8 eingehängt ist. Der hintere Schwingarm 8 ist wie der vordere Schwingarm 7 als H-artiger Bügel 19 ausgebildet (siehe Figur 2 und 5), welche vier Schenkel 20, 21, 22 und 23, eine Querverbindung 24 und einen Fortsatz 25 (siehe Figur 3) umfasst. Hierbei sind der erste und der zweite Schenkel 20, 21 mit dem Träger 6 verbunden, hierbei sind die Schenkel 22, 23 mit dem Sitzelement 5 verbunden und hierbei ist der Fortsatz 25 mit dem Rückenelement 4 verbunden, so dass der hintere Schwingarm 8 sowohl mit dem Sitzelement 5 als auch mit dem Rückenelement 4 in Verbindung steht.

Zur Kompensation eines Körpergewichts G einer nicht dargestellten, auf dem Stuhl 1 sitzenden Person umfasst die Mechanikbaugruppe 2 vier Blattfedern 26, 27, 28 und 29. Hierbei sind die inneren, einer Mittellängsachse ML nahen Blattfedern 26 und 28 als breite Blattfedern und die der Mittellängsachse ML fernen Blattfedern 27 und 29 als schmale Blattfedern ausgebildet (siehe Figur 5). Aus der Figur 6 ist ersichtlich, dass den schmalen Blattfedern 27 und 29 auf einem Boden 30 des Trägers 6 jeweils ein Auflage 31, 32 zugeordnet ist, welches an dem Träger 6 ausgebildet ist. Hierdurch ist die Rückstellkraft der schmalen Blattfedern 27 und 29 auf einen festen Wert festgelegt.

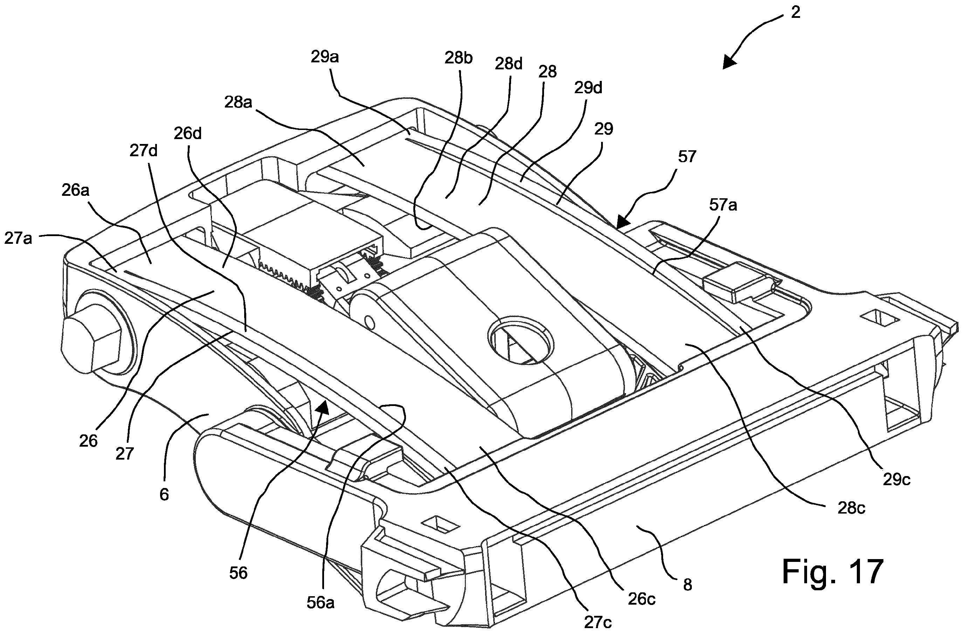

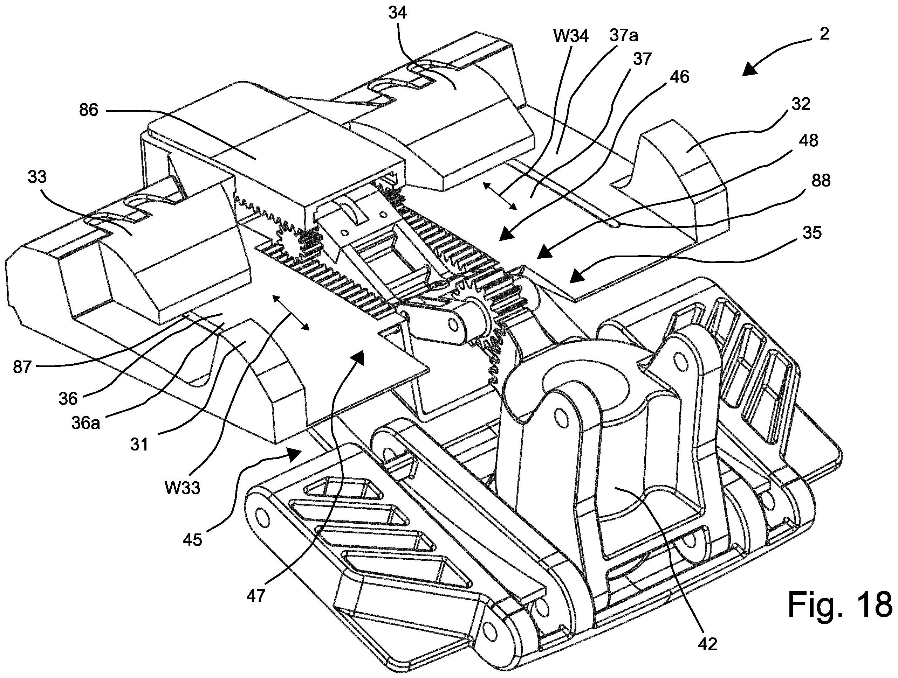

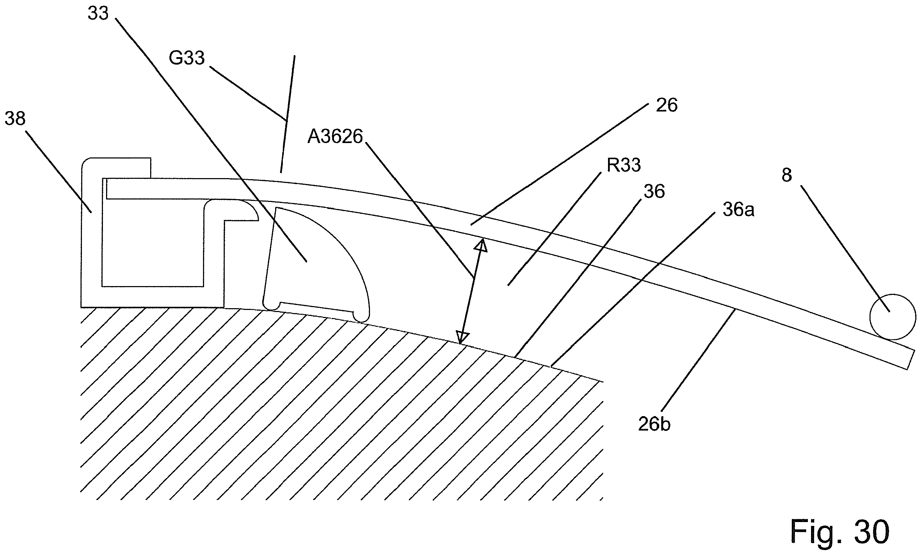

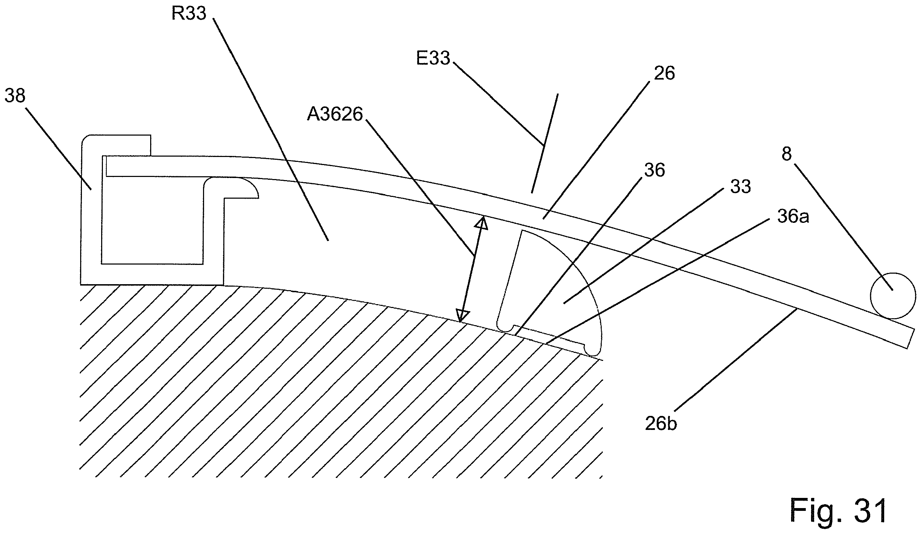

Die Mechanikbaugruppe 2 umfasst zwei verstellbare Auflager 33, 34, einen Verstellmechanismus 35 für die Auflager 33, 34 und Fahrbahnen 36, 37 für die Auflager 33, 34 (siehe insbesondere Figur 18). Die Auflager 33, 34 sind unter Ausbildung eines Stegs 86 miteinander verbunden und in zwei parallel verlaufenden Führungen 87, 88 geführt (siehe Figur 18). Hierdurch ist einem Verkanten bei einer Verfahrbewegung wirksam vorgebeugt. Die Fahrbahnen 36, 37 sind als in Richtung der Blattfedern 26 bzw. 28 gewölbte Flächen 36a, 37a ausgebildet. Hierbei ist die Wölbung der Fahrbahnen 36 bzw. 37 derart an die Wölbung, welche die Blattfedern 26 bzw. 28 mit ihrer Unterseite 26b bzw. 28b dann aufweisen, wenn das Rückenelement 4 in einer aufrechten, durch einen Nutzer unbelasteten Stellung steht, angepasst, dass ein radial zu der Fahrbahn 36 bzw. 37 gemessener Abstand A3626 (siehe Figur 30) im gesamten Bewegungsraum R33 des Auflagers 33 immer etwa gleichbleibend und immer so groß ist, dass das Auflager 33 bzw. 34 ungehindert von der Blattfeder 26 bzw. 28 auf der Fahrbahn 36 bzw. 37 verschoben werden kann. Hierzu wird auf die Figuren 17 und 18 und die skizzenhaften und rein schematischen Figuren 30 und 31 verwiesen. Diese zeigen eine Querwand 38, die an der Querwand 38 befestigte Blattfeder 26 und die Fahrbahn 36. Weiterhin ist durch einen Kreis der hintere Schwingarm 8 angedeutet, welcher sich auf der Blattfeder 26 abstützt. In der Darstellung der Figur 30 steht das Auflager 33 in einer Grundstellung G33, welche dieses einnimmt, wenn der Stuhl unbelastet ist. In der Darstellung der Figur 31 steht das Auflager 33 in einer Endstellung E33, welche dieses einnimmt, wenn der Stuhl durch eine schwere Person belastet ist.

Sowohl die inneren Blattfedern 26, 28 als auch die äußeren Blattfedern 27, 29 (siehe Figur 5) sind mit einem ersten Endbereich 26a, 27a, 28a, 29a an der zwischen den Achszapfen 9, 10 angeordneten Querwand 38 in einer Aufnahme 39 an dem Träger 6 fixiert.

Außerhalb ihrer Endbereiche 26a, 27a, 28a, 29a liegen die Blattfeder 26, 27, 28 und 29 jeweils mit einer Unterseite 26b, 27b, 28b, 29b auf dem ihnen zugeordneten Auflager 33, 31, 34, 32 auf und stützen mit gegenüber liegenden Endbereichen 26c, 27c, 28c, 29c indirekt die Sitzschale S ab bzw. direkt den hinteren Schwingarm 8 an seinem Querverbinder 24 ab (siehe Figur 5).

Die äußeren Blattfedern 27, 29 der Mechanikbaugruppe 2 bilden weitere Federelement 40, 41. Hierbei addiert sich die elastische Rückstellkraft R40, R41 der beiden weiteren Federelement 40, 41 und die elastische Rückstellkraft R26, R28 der beiden inneren Blattfedern 26, 28 zu einer Gesamtrückstellkraft RG, welche die Sitzschale S über den Schwingarm 8 abstützt.

Die zwei inneren Blattfedern 26, 28 der Mechanikbaugruppe 2 sind den verfahrbaren Auflagern 33, 34 zugeordnet, wobei jedes Auflager 33, 34 einer der Blattfedern 26, 28 zugeordnet ist und wobei die Auflager 33, 34 von dem Verstellmechanismus 35 unter den Blattfedern 26, 38 verfahrbar sind und auf ihren Fahrbahnen 36, 37 von diesem jeweils um gleiche Wegstrecken W33, W34 verfahrbar sind (siehe Figur 6).

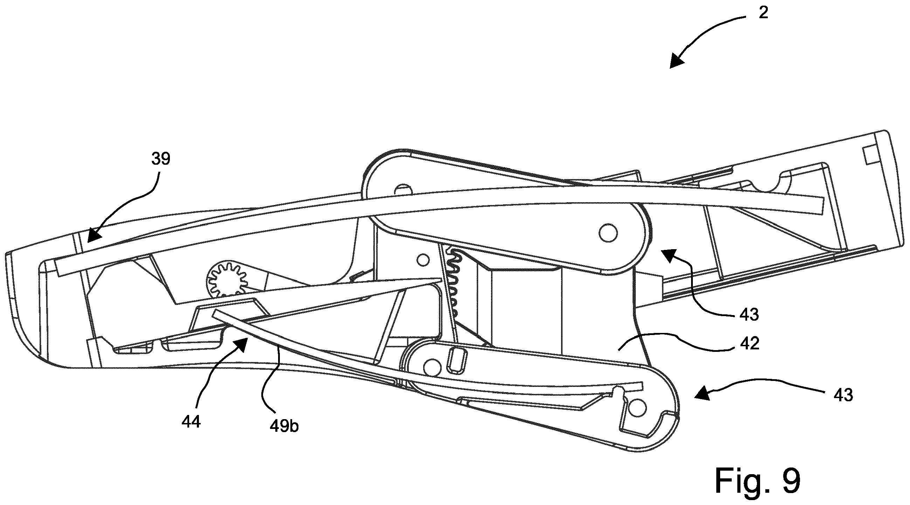

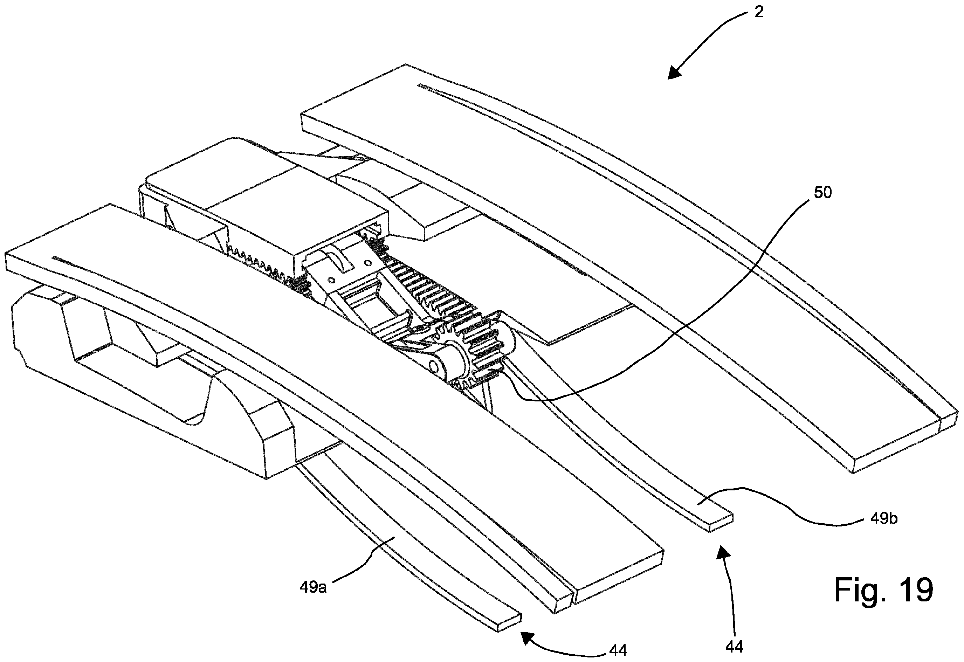

Der Träger 6 ist indirekt mit dem Fußelement 3 verbunden, wobei die Mechanikbaugruppe 2 zusätzlich zu dem Träger 6 noch einen Flansch 42 (siehe Figur 18), ein Gelenkmittel 43 (siehe Figur 9) und ein Wiegemittel 44 (siehe Figur 19) umfasst. Hierbei ist der Flansch 42 mit dem Fußelement 3 verbunden. Hierbei ist der Träger 6 über das Gelenkmittel 43 an dem Flansch 42 angelenkt und hierbei ist der Träger 6 über das Wiegemittel 44 an dem Flansch 42 abgestützt (siehe Figur 9). Das Gelenkmittel 43 ist als Vierpunktgelenk mit vier Gelenkachsen GLA-1 bis GLA-4 ausgebildet, welches ein Absinken des Trägers 6 bei dessen Belastung durch eine sich setzende Person ermöglicht. Hierbei sinkt der Träger 6 soweit ab bis dessen Belastung durch das Wiegemittel 44, welches durch die weiteren Blattfedern bzw. Wiegefedern 49a, 49b (siehe auch Figur 19) gebildet ist, kompensiert ist. Sobald die Person wieder aufsteht, heben die Wiegefedern 49a, 49b den Träger 6 wieder an.

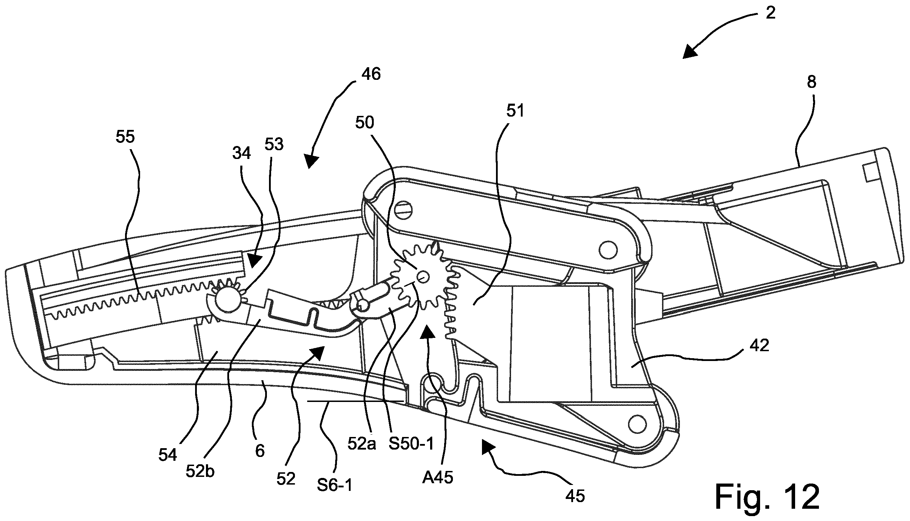

Der Verstellmechanismus 35 umfasst eine Wiegemechanik 45 und eine Verstellmechanik 46, wobei die Wiegemechanik 45 die Verstellmechanik 46 in Abhängigkeit von dem Körpergewicht G einer auf dem Sitzelement 5 sitzenden Person antreibt und die verfahrbaren Auflager 33, 34 von der Verstellmechanik 46 zeitgleich entsprechend dem Körpergewicht G der sitzenden Person um gleiche Wegstrecken W33, W34 entlang ihrer Fahrbahnen 36, 37 derart verschoben werden, dass die Sitzschale S in einer dem Körpergewicht G der Person entsprechenden Stärke mittels des hinteren Schwingarms 8 an dem Träger 6 abgestützt ist (siehe insbesondere auch Figur 18). Hierzu umfasst die Verstellmechanik 46, welche von der Wiegemechanik 45 angetrieben wird, ein erstes Getriebe 47 mit einer ersten Untersetzung oder Übersetzung und ein zweites Getriebe 48 mit einer zweiten Untersetzung oder Übersetzung. Gemäß der dargestellten Ausführungsvariante sind das erste und das zweite Getriebe 47, 48 mit gleichem Übersetzungsverhältnis bzw. gleicher Untersetzung oder gleicher Übersetzung ausgebildet. Hierzu wird insbesondere auf die Figur 18 und die unterschiedliche Stellungen zeigenden Figuren 12 bis 14 verwiesen.

Hinsichtlich der grundsätzlichen Funktion eines Wiegemechanismus, bei welchem durch das Körpergewicht einer auf dem Stuhl sitzenden Person eine Einstellung der Rückstellkraft vorgenommen wird, welche der Stuhl den Bewegungen - wie z.B. dem Zurücklehnen - der Person entgegensetzt, wird grundsätzlich auf die bereits in der Beschreibungseinleitung zitierte WO 2007/110732 A2 Bezug genommen.

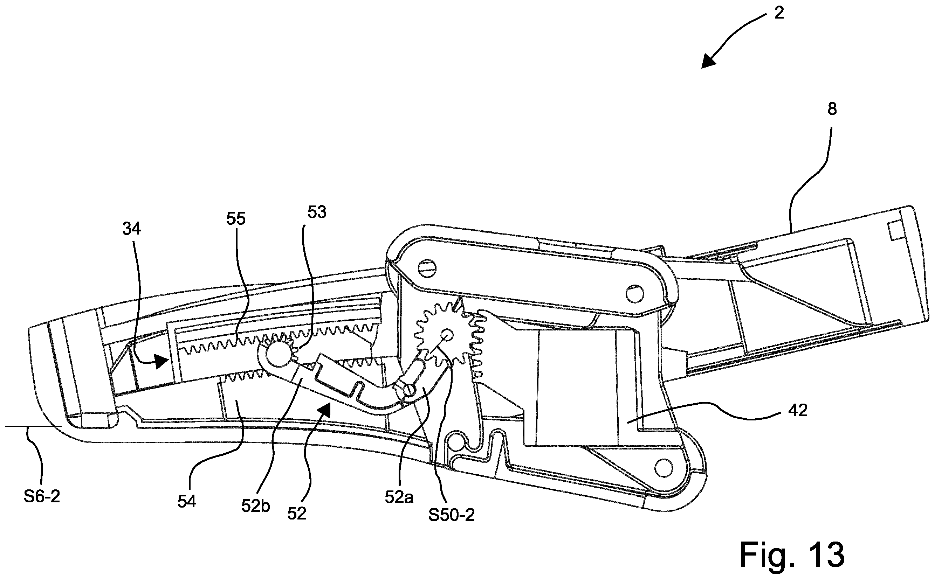

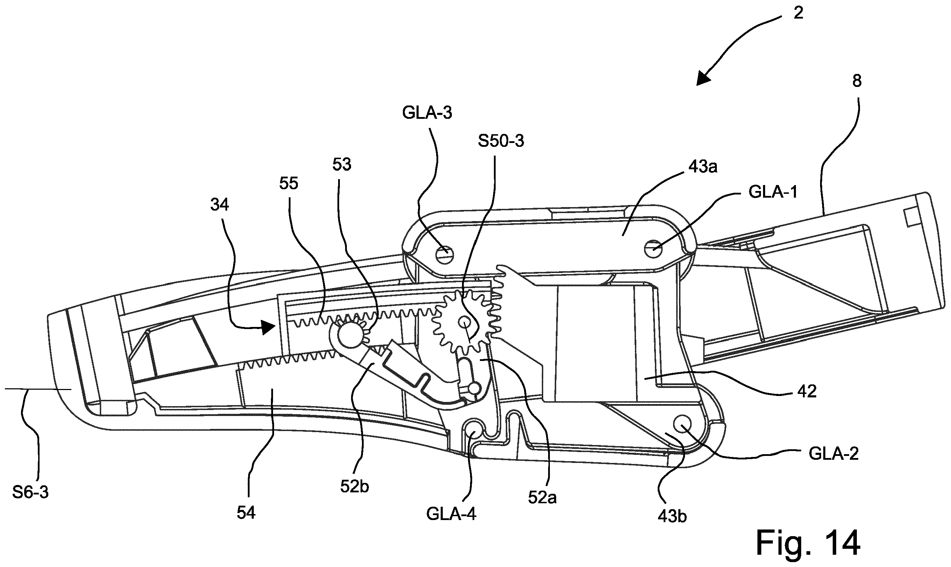

Die Figur 12 zeigt einen Längsschnitt durch die Mechanikbaugruppe 2, wobei der Flansch 42 erkennbar ist, welcher auf dem Fußelement 3 fixiert ist. Durch das in der Figur 9 bzw. 19 sichtbare Wiegemittel 44, welches durch die zwei weiteren Blattfeder 49a, 49b ausgebildet ist, wird der Träger 6, von welchem die nicht dargestellte Sitzschale S getragen wird, in der in der Figur 12 gezeigten unbelasteten Stellung S6-1 gehalten. Hierbei kämmt ein drehbar an dem Träger 6 gelagertes Zahnrad 50 der Verstellmechanik 46 mit einer an dem Flansch 42 ausgebildeten Zahnstange 51 und bildet mit dieser einen Antrieb A45 für die Getriebe 47, 48. Bei einer leichten Belastung des Sitzelements 5 bzw. der Sitzschale S sinkt der Träger 6 gegen die Federkraft der Blattfedern 49a, 49b gegenüber dem Flansch 42 in die in der Figur 13 gezeigte Stellung S6-1 ab. Das Zahnrad 50 wird beim Absinken von der Zahnstange 51 angetrieben und dreht sich gegen den Uhrzeigersinn aus einer ersten Drehstellung S50-1 (siehe Figur 12) in eine zweite Drehstellung S50-2 (siehe Figur 13). Über einen Gelenkhebel 52, dessen erster Schenkel 52a starr mit dem Zahnrad 50 verbunden ist, dessen zweiter Schenkel 52b mit dem erste Schenkel 52a drehgelenkig verbunden ist und dessen zweiter Schenkel 52b an seinem freien Ende ein weiteres Zahnrad 53 drehbar lagert, erzwingt die Linksdrehung des ersten Zahnrads 50 ein leichtes Einknicken des Gelenkhebels 52. Bei diesem Einknicken wälzt sich das zweite Zahnrad 53, welches zwischen einer weiteren Zahnstange 54, die an dem Träger 6 ausgebildet ist, und einer an dem verfahrbaren Auflager 34 ausgebildeten Zahnstange 55 läuft, auf der unteren Zahnstange 54 ab. Hierbei bewegt das zweite Zahnrad 53 durch seine Rechtsdrehung und seine Positionsänderung die dritte Zahnstange 55 und damit das Auflager 34 nach rechts in Richtung des Flansches 42, so dass die dem Auflager 34 zugeordnete Blattfeder 28 eine zunehmende Unterstützung erfährt und hierdurch eine größere Rückstellkraft auf den hinteren Schwingarm 8 ausübt. In der Figur 14 ist das Körpergewicht, welches auf das Sitzelement 5 bzw. die Sitzschale S wirkt noch größer und der Träger sinkt in die Stellung S6-3 gegenüber dem Flansch 42 ab, so dass das Auflager 34 weiter in Richtung des Flansches 42 bewegt wird.

Das erwähnte zweite Getriebe 48 umfasst somit den Gelenkhebel 52, das zweite Zahnrad 53 und die Zahnstangen 54 und 55. Das erste Zahnrad 50 treibt - wie aus der Figur 50 ersichtlich ist - die Gelenkhebel beider Getriebe an und ist somit Bestandteil beider Getriebe. Unterschiedliche Übersetzungsverhältnisse bzw. Untersetzungen oder Übersetzungen der Getriebe können abweichend von den Darstellungen der Figuren 1 bis 19 durch sich unabhängig voneinander bewegende und unterschiedlich ausgelegte Gelenkhebel und/oder durch unterschiedliche Auslegung der durch das jeweils zweite Zahnrad, die zugehörige Zahnstange und das zugehörige Auflager gebildeten Einheiten realisiert werden.

Das nicht näher dargestellte erste Getriebe 47 umfasst all die erwähnten Bauteile nochmals, so dass auch das andere Auflager 33 in Abhängigkeit von der an dem Flansch 42 ausgeführten Zahnstange 51 und der hierdurch hervorgerufenen Drehbewegung des Zahnrads 50 bewegbar ist. Hierbei weisen das erste Getriebe, welches das Auflager 33 bewegt, und dass das zweite Getriebe, welches das Auflager 34 bewegt, gleiche Übersetzungsverhältnisse bzw. Untersetzungen oder Übersetzungen auf und bewegen hierdurch die Auflager 33, 34 synchron bzw. in gleichen Zeiträumen um gleiche Wegstrecken W33, W34.

In der Figur 14 ist der Träger 6 - wie erwähnt - in der stark belasteten Stellung S6-3 gezeigt, in welcher das Zahnrad 50 in einer Drehstellung S50-3 steht. Entsprechend ist in dieser Drehstellung S50-3 dann auch das Auflager 34 noch weiter nach rechts in Richtung des Flansches 42 verfahren, so dass die Blattfeder 28 eine noch höhere Rückstellkraft auf den hinteren Schwingarm 8 ausübt. Der Träger 6 ist an dem Flansch 42 mittels der Gelenkmittel 43 geführt, diese sind als zwei parallel arbeitende Hebel 43a, 43b ausgeführt.

Zum Beispiel aus der Figur 17 ist ersichtlich, dass die breite Blattfeder 26 und die schmale Blattfeder 27 sowie die breite Blattfeder 28 und die schmale Blattfeder 29, also jeweils eine zusätzlich Blattfeder mit einer verstellbaren Blattfeder in ihren ersten Endbereichen 26a, 27a bzw. 28a, 29a jeweils miteinander zu Fingerfedern 56, 57 verbunden sind und außerhalb ihres ersten Endbereichs 26a, 27a bzw. 28a, 29a, nämlich in einem Mittelbereicht 26d, 27d bzw. 28d, 29d und einem gegenüberliegenden Endbereich 26c, 27c bzw. 28c, 29c jeweils durch einen Schlitz 56a bzw. 57a getrennt sind.

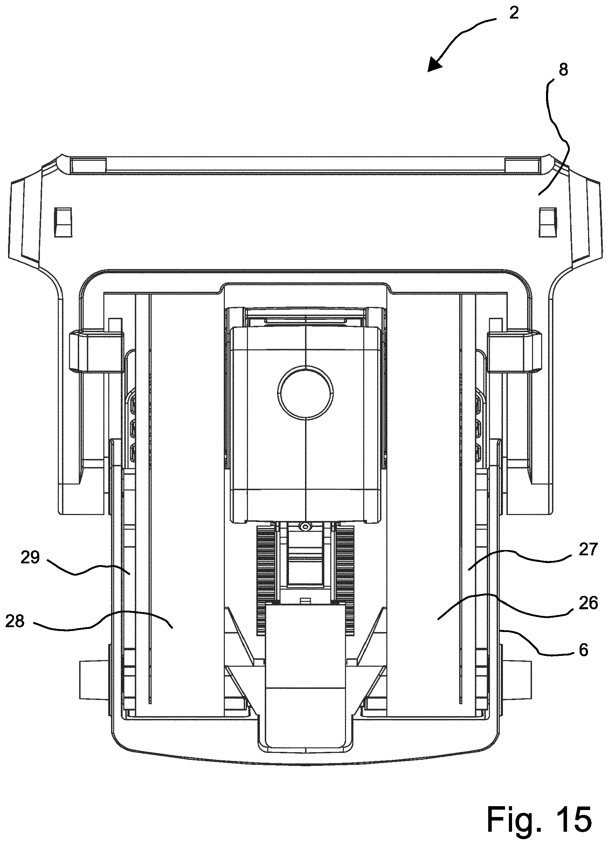

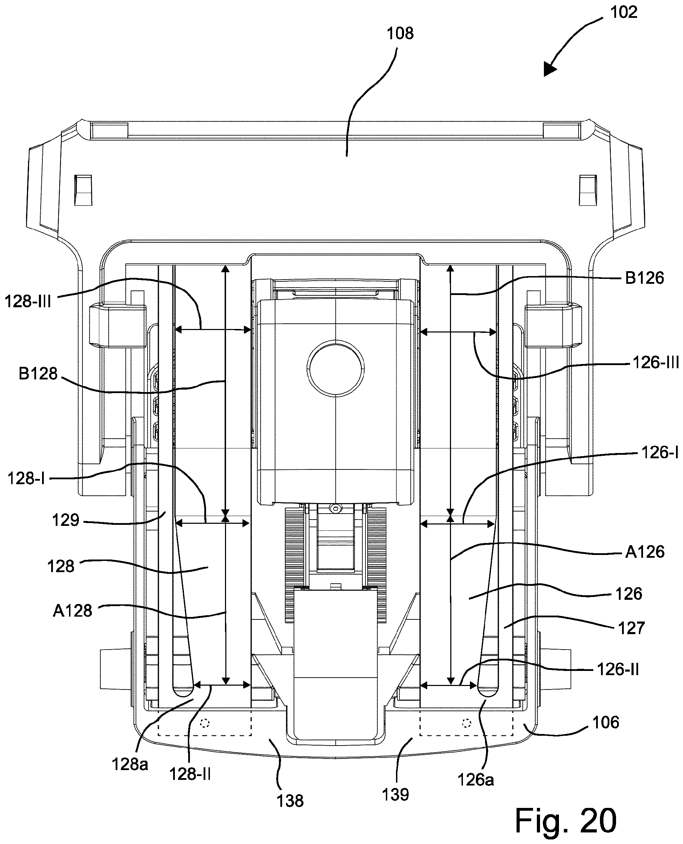

Die in den Figuren 20 bis 22 dargestellten Mechanikbaugruppen sind vergleichbar zu der in den Figuren 1 bis 19 gezeigten Mechanikbaugruppe aufgebaut. Entsprechend werden für prinzipiell vergleichbare Bauteile jeweils um 100 bzw. 200 bzw. 300 erhöhte Bezugszeichen verwendet und hiermit auch Bezug auf die Beschreibung zu den Figuren 1 bis 19 genommen. In der Figur 20 ist in zu der Figur 15 vergleichbarer Ansicht eine zweite Ausführungsvariante einer Mechanikbaugruppe 102 gezeigt. Auch hier sind eine breite, innere Blattfeder 126 und eine schmale, äußere Blattfeder 127 sowie eine breite, innere Blattfeder 128 und eine schmale, äußeren Blattfeder 129 in Draufsicht zu sehen. Diese sind in einer durch eine Querwand 138 eines Trägers 106 gebildeten Aufnahme 139 endseitig und einseitig eingespannt und stützen einen hinteren Schwingarm 108 ab. Unter diesen Blattfedern sind wie bei der ersten Ausführungsvariante in der vorliegenden Darstellung nicht näher erkennbare Auflager angeordnet. Die Blattfedern 126 und 127 sowie 128 und 129 sind im Bereich der Aufnahme 139 miteinander durch einen Verbindungssteg 126a bzw. 128a verbunden. Im Unterschied zu der ersten Ausführungsvariante der Mechanikbaugruppe sind die breiten Blattfedern 126 und 128 der zweiten Ausführungsvariante der Mechanikbaugruppe 102 derart ausgebildet, dass sich diese in einem der Aufnahme 139 nahen Abschnitt A126 bzw. A128 von einer Breite 126-I bzw. 128-I auf eine Breite 126-II bzw. 128-II zu der Aufnahme 139 hin verjüngen. In einem der Aufnahme 139 fernen Abschnitt B126 bzw. B128, welcher sich an den Abschnitt A126 bzw. A128 anschließt, weisen die Blattfedern 126 bzw. 128 durchgängig eine etwa der Breite 126-I bzw. 128-I entsprechende Breite 126-III bzw. 128-III auf.

Es ist auch vorgesehen, dass die breiteren Blattfedern in ihrem der Aufnahme nahen Abschnitt in der Draufsicht dreieckähnlich oder rautenähnlich oder trapezähnlich ausgebildet sind.

Weiterhin ist es auch vorgesehen, dass die breiteren Blattfedern insbesondere durch eine Verringerung ihrer Breite zu der Aufnahme hin derart ausgestaltet sind, dass ihr Biegemoment zu der Aufnahme hin abnimmt.

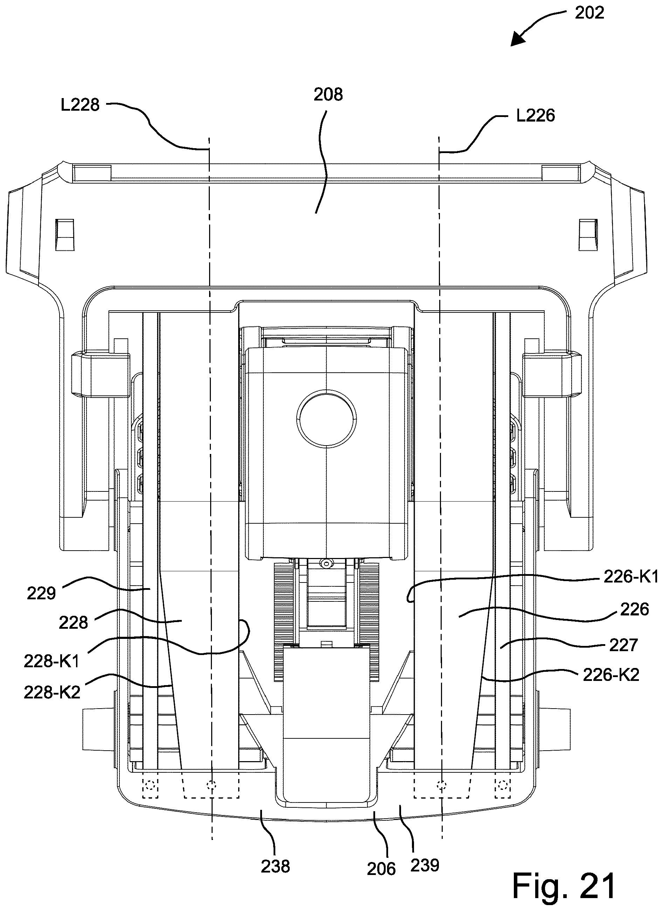

In der Figur 21 ist in zu der Figur 15 bzw. 20 vergleichbarer Ansicht eine dritte Ausführungsvariante einer Mechanikbaugruppe 202 gezeigt. Auch hier sind eine breite, innere Blattfeder 226 und eine schmale, äußere Blattfeder 227 sowie eine breite, innere Blattfeder 228 und eine schmale, äußeren Blattfeder 229 in Draufsicht zu sehen. Diese sind in einer durch eine Querwand 238 eines Trägers 206 gebildeten Aufnahme 239 endseitig und einseitig eingespannt und stützen einen hinteren Schwingarm 208 ab. Im Unterschied zu der zweiten Ausführungsvariante sind die Blattfedern hier als eigenständige, unverbundene Bauteile ausgeführt. Wie auch bei der zweiten Ausführungsvariante verjüngen sich die breiteren Blattfedern 226 und 228 zu der Aufnahme 239 bzw. zu dem Träger 206 hin in ihren Breiten. Hierbei weisen die Blattfedern 226 und 228 eine Kante 226-K1 bzw. 228-K1 auf, welche parallel zu einer Längserstreckung L226 bzw. L228 steht. Hierbei weisen die Blattfedern 226 und 228 eine Kante 226-K2 bzw. 228-K2 auf, welche nahe der Aufnahme 239 schräg zu einer Längserstreckung L226 bzw. L228 der breiteren Blattfedern 226 bzw. 228 verläuft.

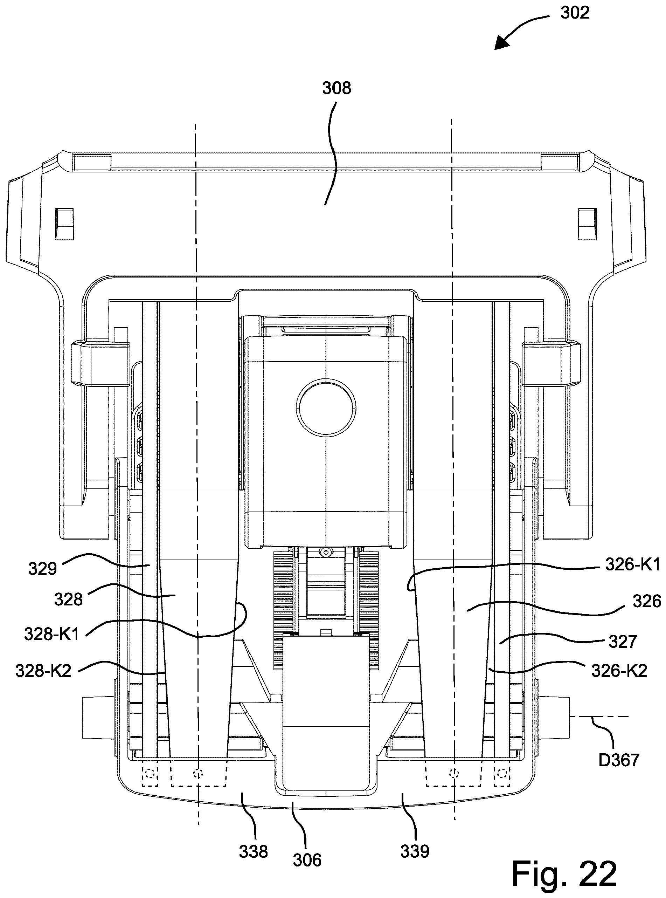

In der Figur 22 ist in zu der Figur 15 bzw. 20 bzw. 21 vergleichbarer Ansicht eine vierte Ausführungsvariante einer Mechanikbaugruppe 302 gezeigt. Auch hier sind eine breite, innere Blattfeder 326 und eine schmale, äußere Blattfeder 327 sowie eine breite, innere Blattfeder 328 und eine schmale, äußeren Blattfeder 329 in Draufsicht zu sehen. Diese sind in einer durch eine Querwand 338 eines Trägers 306 gebildeten Aufnahme 339 endseitig und einseitig eingespannt und stützen einen hinteren Schwingarm 308 ab. Im Unterschied zu der zweiten Ausführungsvariante sind die Blattfedern hier als eigenständige, unverbundene Bauteile ausgeführt. Wie auch bei der zweiten und der dritten Ausführungsvariante verjüngen sich die breiteren Blattfedern 326 und 328 zu der Aufnahme 339 bzw. zu dem Träger 306 hin in ihren Breiten. Hierbei weisen die Blattfedern 326 und 328 jeweils zwei Kanten 326-K1 und 326-K2 bzw. 328-K1 und 328-K2 auf, welche nahe der Aufnahme 339 schräg zu einer Längserstreckung L326 bzw. L328 der breiteren Blattfedern 326 bzw. 328 verläuft. Hierbei sind die Längserstreckung L326 bzw. L328 orthogonal zu einer Drehachse D367 ausgerichtet.

Durch die zu den Figuren 20 bis 22 beschriebene Ausgestaltung ist es möglich, die Mechanik des Stuhls genauer auf Personen mit einer Gewichtsklasse von etwa 40 kg bis 60 kg einzustellen.

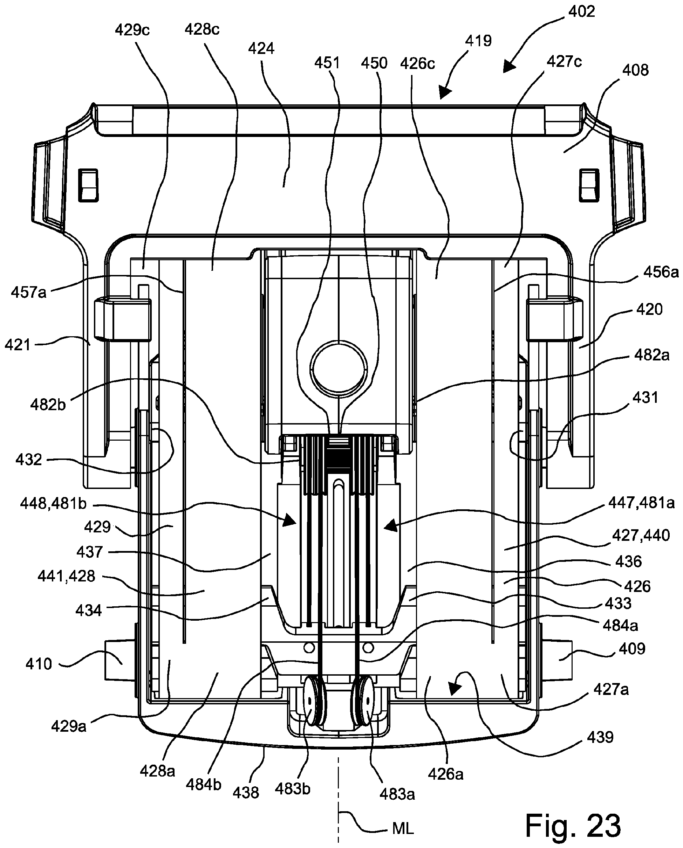

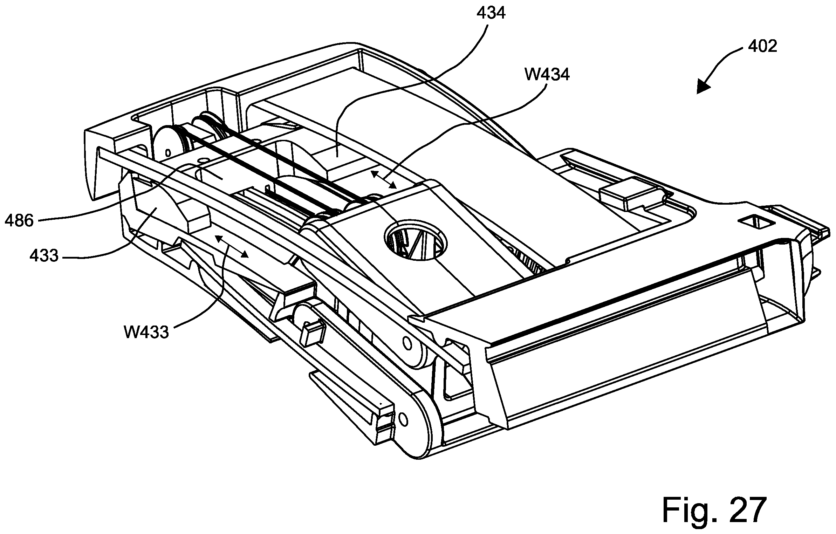

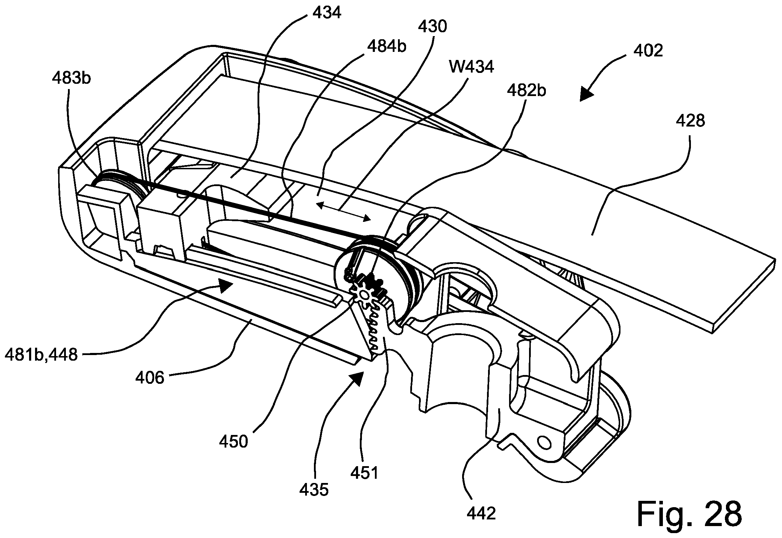

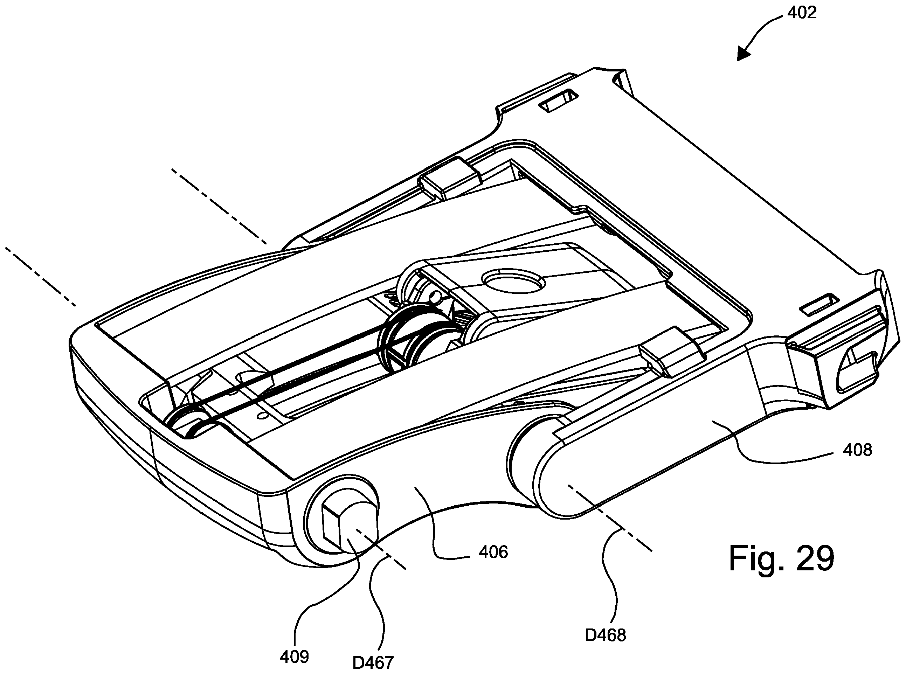

Alternativ zu der in der Figur 1 gezeigten Mechanikbaugruppe 2 ist auch eine in den Figuren 23 bis 29 in verschiedenen Ansichten gezeigte fünfte Ausführungsvariante einer Mechanikbaugruppe 402 zur Verbindung mit den in der Figur 1 gezeigten weiteren Baugruppen des in der Figur 1 gezeigten Stuhls 1 geeignet, so dass ein erfindungsgemäßer Stuhl auch mit der Mechanikbaugruppe 402 ausgebildet sein kann.

Die in den Figuren 23 bis 29 in schematischer Darstellung gezeigte fünfte Ausführungsvariante der Mechanikbaugruppe 402 weist zu der ersten Ausführungsvariante der Mechanikbaugruppe 2 grundsätzlich einen vergleichbaren Aufbau auf. Insofern wird auch auf die Beschreibung zu der ersten Ausführungsvariante der Mechanikbaugruppe 2 verwiesen. Hierbei sind korrespondierende Bauteile jeweils mit einer um 400 erhöhten Bezugszeichennummer bezeichnet. Der hintere Schwingarm 408 ist nur etwa zur Hälfte dargestellt.

Im Unterschied zu der ersten Ausführungsvariante der Mechanikbaugruppe 2 sind bei der fünften Ausführungsvariante der Mechanikbaugruppe 402 das erste und das zweite Getriebe 447 und 448 nicht als Zahnstangengetriebe ausgebildet, sondern sind jeweils als Riemengetriebe 481a bzw. 481b ausgebildet. Zum Antrieb der beiden Riemengetriebe 481a, 481b ist das drehbar an dem Träger 406 angeordnete Zahnrad 450, welches sich bei einer Belastung des Trägers 406 durch eine Gewichtskraft einer sitzenden Person an der an dem Flansch 442 angeordneten Zahnstange 451 abwälzt, drehfest mit einer ersten Riemenscheibe 482a des ersten Riemengetriebes 481a und drehfest mit einer ersten Riemenscheibe 482b des ersten Riemengetriebes 481b verbunden. Das Zahnrad 450 und die Zahnstange 451 bilden somit einen Antrieb A445 für die Riemengetriebe 481a, 481b.

Das erste Riemengetriebe 481a umfasst neben der ersten Riemenscheibe 482a eine zweite Riemenscheibe 483a einen Riemen 484a und einen mit dem Riemen 484a verbundenen Mitnehmer 485a.

Das zweite Riemengetriebe 481b umfasst neben der ersten Riemenscheibe 482b eine zweite Riemenscheibe 483b, einen Riemen 484b und einen mit dem Riemen 484b verbundenen Mitnehmer 485b.

Die beiden Riemengetriebe 481a und 481b weisen das gleiche Übersetzungsverhältnis auf, so dass das an dem Mitnehmer 485a angeordnete Auflager 433 des ersten Riemengetriebes 481a und das an dem Mitnehmer 485b angeordnete Auflager 434 des zweiten Riemengetriebes 481b abhängig von dem Gewicht einer auf dem Stuhl sitzenden Person um gleiche Wegstrecken W433 bzw. W434 und in gleicher Geschwindigkeit bewegt wird. Anders ausgedrückt werden die beiden Auflager 433 und 434 synchron bewegt. Um eine Bewegung der Auflager 433 und 434 z.B. sicherzustellen, wenn einer der Riemen 484a bzw. 484b durchrutscht, sind die beiden Auflager 433 und 434 durch einen Steg 486 miteinander verbunden.

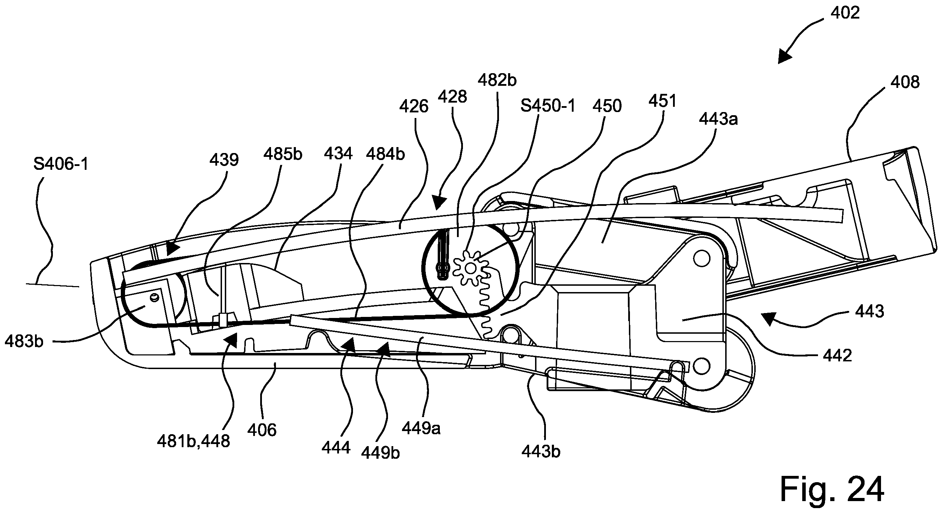

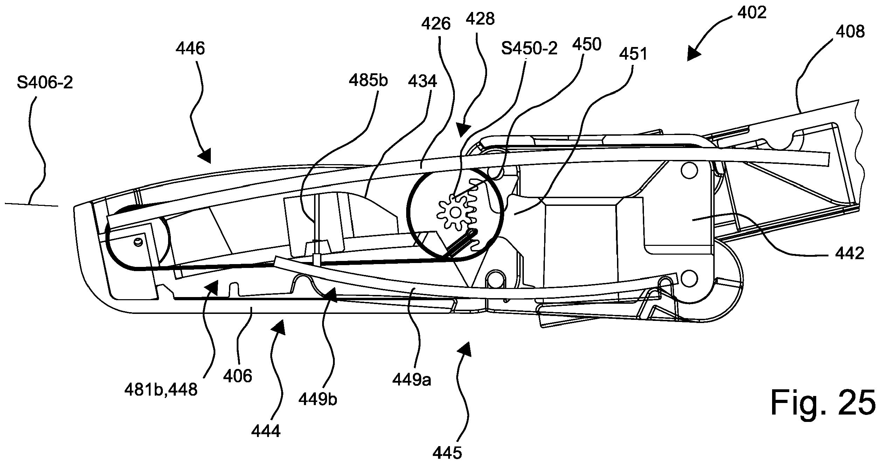

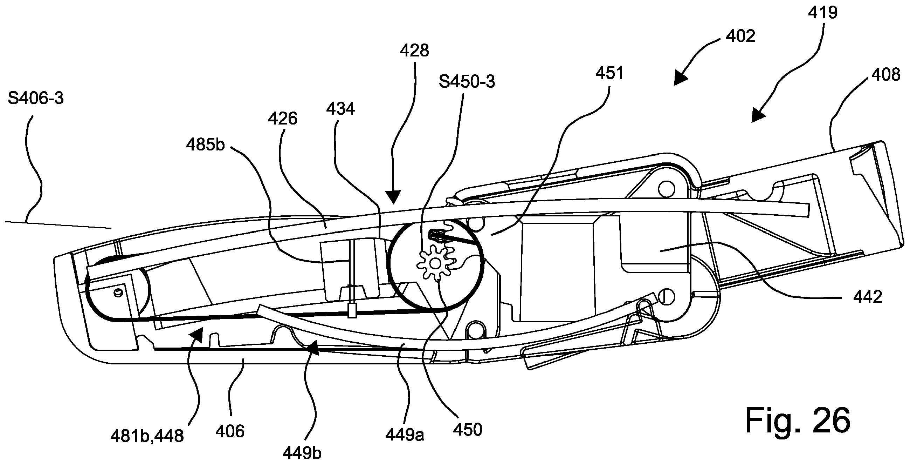

Anhand einer vergleichenden Betrachtung der Figuren 24, 25 und 26 ist in Analogie zu den Figuren 12, 13 und 14 erkennbar wie die Riemengetriebe 481a, 481b von dem Zahnrad 450 angetrieben werden. In der Figur 24 steht der Träger 406 in einer unbelasteten Stellung S406-1, welche dieser einnimmt, wenn der Stuhl nicht belastet ist. In der Figur 25 steht der Träger 406 in einer leicht belasteten Stellung S406-2, welche dieser einnimmt, wenn der Stuhl leicht belastet ist. In der Figur 26 steht der Träger 406 in einer belasteten Stellung S406-3, welche dieser einnimmt, wenn der Stuhl stärker belastet ist. Das der Stuhl mit einem zunehmend höheren Gewicht belastet wird, ist an der Durchbiegung der das Wiegemittel bildenden Blattfedern erkennbar, wobei in den Figuren 24 bis 26 die Blattfeder 449a die dahinter liegende Blattfeder 449b verdeckt.

Die zugehörigen Drehstellungen S450-1, S450-2 bzw. S450-3 erreicht das Zahnrads 450 durch Linksdrehungen, diese bewirken über die Riemengetriebe 481a, 481b, dass sich die Mitnehmer 485a, 485b und mit ihnen die Auflager 433 bzw. 434 zunehmend nach rechts bewegen. Die Mitnehmer 485a, 485b sind hierbei am Zugtrum des Riemens 484a bzw. 484b fixiert. In den Figuren 24 bis 26 ist jeweils nur das zweite Riemengetriebe 481b gezeigt. Das erste Riemengetriebe 481a funktioniert in gleicher Weise.

Die Blattfedern 426, 427 bzw. 428, 429 sind in den Figuren 23 bis 29 teilweise nur durch einen geometrischen Körper symbolisiert. Weiterhin sind die Figuren 23 bis 29 als schematische Darstellungen ausgeführt, in welchen geschnittene Flächen zur Erhaltung der Übersichtlichkeit ohne Schraffuren dargestellt sind.

Gemäß einer nicht dargestellten Ausführungsvariante ist es auch vorgesehen, die beiden Riemengetriebe derart auszuführen, dass diese unterschiedliche Übersetzungsverhältnisse aufweisen. Bei einer derartigen Ausführung sind dann die Auflager nicht durch einen Steg verbunden und können sich um unterschiedliche Wegstrecken und bewegen. Ein unterschiedliches Übersetzungsverhältnis wird z.B. durch unterschiedliche Durchmesser der zweiten Riemenscheiben herbeigeführt.

### Bezugszeichenliste:

- 1: Stuhl
- 2: Mechanikbaugruppe
- 3: Fußelement
- 4: Rückenelement
- 5: Sitzelement
- 6: Träger
- 7: vorderer Schwingarm
- 8: hinterer Schwingarm
- 9, 10: Achszapfen an 6
- 11: H-artiger Bügel gebildet von 7
- 12 - 15: Schenkel von 11
- 16: Querverbinder von 11
- 17, 18: Achszapfen an 6
- 19: H-artiger Bügel gebildet von 8
- 20-23: Schenkel von 19
- 24: Querverbinder von 19
- 25: Fortsatz von 19
- 26: breite, innere Blattfeder
- 26b: Unterseite von 26
- 27: schmale, äußere Blattfeder
- 28: breite, innere Blattfeder
- 28b: Unterseite von 26
- 29: schmale, äußere Blattfeder
- 30: Boden von 6
- 26a - 29a: erster Endbereich von 26 - 29
- 26b - 29b: Unterseite von 26 - 29
- 26c - 29c: zweiter Endbereich von 26 - 29
- 31, 32: Auflager für 27, 29 an 6
- 33, 34: verfahrbares Auflager
- 35: Verstellmechanismus
- 36, 37: Fahrbahn für Auflager 33 bzw. 34
- 36a: gewölbte Fläche gebildet durch 36
- 38: Querwand von 6
- 39: Aufnahme an 6 für 26 bis 29
- 40: weiteres Federelement gebildet durch 27
- 41: weiteres Federelement gebildet durch 29
- 42: Flansch
- 43: Gelenkmittel
- 43a, 43b: erster, zweiter Hebel
- 44: Wiegemittel
- 45: Wiegemechanik von 35
- 46: Verstellmechanik von 35
- 47: erstes Getriebe
- 48: zweites Getriebe
- 49a, 49b: Blattfeder bildet Wiegenmittel 44
- 50: Zahnrad von 46 gelagert an 50
- 51: Zahnstange an 42
- 52: Gelenkhebel
- 52a, 52b: erster, zweiter Schenkel
- 53: zweites Zahnrad an 52b
- 54: Zahnstange an 6
- 55: Zahnstange an 34
- 56: Fingerfeder aus 26, 27
- 56a: Schlitz von 56
- 57: Fingerfeder aus 28, 29
- 57a: Schlitz von 57
- 86: Steg
- 87: Führung von 33
- 88: Führung von 34

- A45: Antrieb
- D67: Schwenkachse von 6, 7
- D65: erste Schwenkachse von 6, 5
- D68: Schwenkachse von 6, 8
- D56: zweite Schwenkachse von 6, 5
- E33: Endstellung von 33
- GLA-1 - GLA-4: Gelenkachse von 43
- SFR6: rechte Seitenwand des Trägers
- SFL6: linke Seitenwand des Trägers
- G: Körpergewicht einer Person
- G33: Grundstellung von 33
- S: Sitzschale
- R26, R28: Rückstellkraft von 26, 28
- R33: Bewegungsraum von 33
- R40, R41: Rückstellkraft von 40, 41
- RG: Gesamtrückstellkraft
- W33: Wegstrecke von 33
- W34: Wegstrecke von 34
- S6-1: unbelastete Stellung von 6
- S6-2: leicht belastete Stellung von 6
- S6-3: stärker belastete Stellung
- S50-1: erste Drehstellung von 50
- S50-2: zweite Drehstellung von 50
- S50-3: dritte Drehstellung von 50
- ML: Mittellängsachse
- SE: Spiegelebene

- 102: Mechanikbaugruppe
- 106: Träger
- 108: hinterer Schwingarm
- 126: breite, innere Blattfeder
- 126a, 128a: Verbindungssteg
- 126-I, 128-I: Breite
- 126-II, 128-II: Breite
- 126-III, 128-III: Breite
- 127: schmale, äußere Blattfeder
- 128: breite, innere Blattfeder
- 128: schmale, äußeren Blattfeder
- 138: Querwand
- 139: Aufnahme

- A126, A128: Abschnitt
- B126, B128: Abschnitt

- 202: Mechanikbaugruppe
- 206: Träger
- 208: hinterer Schwingarm
- 226: breite, innere Blattfeder
- 226-K1, 226-K2: Kante
- 227: schmale, äußere Blattfeder
- 228: breite, innere Blattfeder
- 228-K1, 228-K2: Kante
- 229: schmale, äußere Blattfeder
- 238: Querwand
- 239: Aufnahme
- L226, L228: Längserstreckung
- L226, L228: Längserstreckung

- 302: Mechanikbaugruppe
- 306: Träger
- 308: hinterer Schwingarm
- 326: breite, innere Blattfeder
- 326-K1, 326-K2: Kante
- 327: schmale, äußere Blattfeder
- 328: breite, innere Blattfeder
- 328-K1, 328-K2: Kante
- 329: schmale, äußere Blattfeder
- 338: Querwand
- 339: Aufnahme

- D367: Drehachse
- L326, L328: Längserstreckung

- 408: hinterer Schwingarm
- 409, 410: Achszapfen an 406
- 417, 418: Achszapfen an 406
- 419: H-artiger Bügel gebildet von 408
- 420, 421: Schenkel von 419
- 424: Querverbinder von 419
- 426: breite, innere Blattfeder
- 427: schmale, äußere Blattfeder
- 428: breite, innere Blattfeder
- 429: schmale, äußere Blattfeder
- 430: Boden von 406
- 426a - 429a: erster Endbereich von 426 - 429
- 426c - 429c: zweiter Endbereich von 426 - 429
- 431, 432: Auflager für 427, 429 an 406
- 433, 434: verfahrbares Auflager
- 435: Verstellmechanismus
- 436, 437: Fahrbahn für Auflager 433 bzw. 434
- 438: Querwand von 406
- 439: Aufnahme an 406 für 426 bis 429
- 440: weiteres Federelement gebildet durch 427
- 441: weiteres Federelement gebildet durch 429
- 442: Flansch
- 443: Gelenkmittel
- 443a, 443b: erster, zweiter Hebel
- 444: Wiegemittel
- 445: Wiegemechanik von 435
- 446: Verstellmechanik von 435
- 447: erstes Getriebe
- 448: zweites Getriebe
- 449a, 449b: Blattfeder bildet Wiegenmittel 444
- 450: Zahnrad von 446 gelagert an 450
- 451: Zahnstange an 442
- 456a: Schlitz
- 457a: Schlitz

- 481a: erstes Riemengetriebe
- 482a: erste Riemenscheibe
- 483a: zweite Riemenscheibe
- 484a: Riemen
- 485a: Mitnehmer
- 481b: zweites Riemengetriebe
- 482b: erste Riemenscheibe
- 483b: zweite Riemenscheibe
- 484b: Riemen
- 485b: Mitnehmer
- 486: Steg

- A445: Antrieb für 481a, 481b
- D467: Schwenkachse von 406, 407
- D468: Schwenkachse von 406, 408
- W433, W434: Wegstrecke
- S406-1: unbelastete Stellung von 406
- S406-2: leicht belastete Stellung von 406
- S406-3: belastete Stellung von 406
- S450-1: erste Drehstellung von 450
- S450-2: zweite Drehstellung von 450
- S450-3: dritte Drehstellung von 450

## Patentansprüche

1. **Mechanikbaugruppe** (2; 402) für einen Stuhl (1),
- wobei an die Mechanikbaugruppe (2; 402) ein Fußelement (3), ein Rückenelement (4) und ein Sitzelement (5) anlenkbar sind,
- wobei das Rückenelement (4) und das Sitzelement (5) eine Sitzschale (S) bilden,
- wobei die Mechanikbaugruppe (2; 402) einen Träger (6; 406), einen vorderen Schwingarm (7) und eine hinteren Schwingarm (8; 408) umfasst,
- wobei der vordere Schwingarm (7) schwenkbar an dem Träger (6; 406) angelenkt und mit dem Sitzelement (5) verbindbar ist,
- wobei der hintere Schwingarm (8; 408) schwenkbar an dem Träger (6; 406) angelenkt ist und mit der Sitzschale (5) verbindbar ist,
- wobei die Mechanikbaugruppe (2; 402) zur Kompensation eines Körpergewichts einer sitzenden Person wenigstens eine Blattfeder umfasst,
wobei die Mechanikbaugruppe (2; 402) weiterhin wenigstens ein verstellbares Auflager (33, 34; 433, 434), einen Verstellmechanismus (35; 435) für das Auflager (33, 34; 433, 434) bzw. die Auflager (33, 34; 433, 434) und wenigstens eine Fahrbahn (36, 37; 436, 437) für das bzw. die Auflager (33, 34; 433, 434) umfasst,
- wobei die Blattfeder (26, 28; 426, 428) bzw. Die Blattfedern (26, 28; 426, 428) jeweils mit einem ersten Endbereich (26a, 28a; 426a, 428a) an dem Träger (6; 406) fixiert ist bzw. sind, außerhalb des Endbereichs (26a, 28a; 426a, 428a) jeweils auf dem Auflager (33, 34; 433, 434) aufliegt bzw. den Auflagern (33, 34; 433, 434) aufliegen und außerhalb des Endbereichs (26a, 28a; 426a, 428a) jeweils die Sitzschale (S) abstützt bzw. abstützen,
- wobei der Träger (6; 406) indirekt mit dem Fußelement (3) verbindbar ist, wobei die Mechanikbaugruppe (2; 402) zusätzlich zu dem Träger (6; 406) noch einen Flansch (42; 442), ein Gelenkmittel (43; 443) und ein
Wiegemittel (44; 444) umfasst, wobei der Flansch (42; 442) mit dem Fußelement (3) verbindbar ist, wobei der Träger (6; 406) über das Gelenkmittel (43; 443) an dem Flansch (42; 442) angelenkt ist, wobei der Träger (6; 406) über das Wiegemittel (44; 4444) an dem Flansch (442) abgestützt ist,
- wobei der Verstellmechanismus (35; 435) eine Wiegemechanik (45; 445) und eine Verstellmechanik (46; 446) umfasst, wobei die Wiegemechanik (45; 445) die Verstellmechanik (46; 446) in Abhängigkeit von dem Körpergewicht einer auf dem Sitzelement (5) sitzenden Person antreibt und die Auflager (33, 34; 433; 434) von der Verstellmechanik (46; 446) zeitgleich entsprechend dem Körpergewicht der sitzenden Person um
unterschiedliche Wegstrecken (W33, W34; W433, W434) entlang ihrer Fahrbahn (36, 37; 436, 437) derart verschoben werden, dass die Sitzschale (S) in einer dem Körpergewicht der sitzenden Person entsprechenden Stärke an dem Träger (6; 406) abgestützt ist, **dadurch gekennzeichnet,**
- **dass** der Flansch (42; 442) eine Zahnstange (51; 451) umfasst, wobei die Zahnstange (51; 451) ein auf das erste verfahrbare Auflager (33; 433) wirkendes erstes Getriebe (47; 447) und ein auf das zweite verfahrebare Auflager (34; 434) wirkendes zweites Getriebe (48; 448) antreibt und dass
- entweder jedes Getriebe (47, 48) einen Gelenkhebel (52) umfasst, wobei der Gelenkhebel (52) einen ersten Schenkel (52a) und einen zweiten Schenkel (52b) umfasst, wobei die beiden Schenkel (52a, 52b) gelenkig verbunden sind, wobei der erste Gelenkhebel (52) an seinem freien Ende verschwenkt wird und der zweite Gelenkhebel (52) an seinem freien Ende ein Zahnrad (53) drehbar hält, welches zwischen einer mit dem Träger (6) verbundenen Zahnstange (54) und einer an dem Auflager (33, 34) angeordneten Zahnstange (55) derart positioniert ist, dass ein Abwälzen des Zahnrads (54) auf der an dem Träger (6) ausgeführten Zahnstange (54) zu einer Relativbewegung zwischen dem Zahnrad (53) und dem Auflager (33, 34) führt, indem das Auflager (33, 34) durch die Drehung und die Linearbewegung des Zahnrads (53) transportiert wird
- oder jedes Getriebe (433, 434) als Riemengetriebe (481a, 481b) ausgebildet ist und eine erste Riemenscheibe (482a, 482b), eine zweite Riemenscheibe (483a, 483b), einen Riemen (484a, 484b) und einen Mitnehmer (485a, 485b) umfasst, wobei das erste Auflager (433) mit dem Mitnehmer (485a) des ersten Riemengetriebes (481a) bewegbar ist und wobei das zweite Auflager (434) mit dem Mitnehmer (485b) des zweiten Riemengetriebes (481b) bewegbar ist.

2. Mechanikbaugruppe nach Anspruch 1, **dadurch gekennzeichnet, dass** das erste und das zweite Getriebe (47, 48) gleiche Übersetzungsverhältnisse insbesondere Untersetzungen oder Übersetzungen aufweisen oder unterschiedliche Übersetzungsverhältnisse insbesondere Untersetzungen oder Übersetzungen aufweisen.

3. Mechanikbaugruppe nach wenigstens einem der vorhergehenden Ansprüche, ferner umfassend eine breitere Blattfeder (126; 128; 226, 228; 326; 328), welche jeder Blattfeder (26, 28; 426, 428) zugeordnet ist, **dadurch gekennzeichnet, dass** sich die breiteren Blattfedern (126, 128; 226, 228; 326, 328) zu einer Aufnahme (139; 239; 339), in welche diese eingespannt sind, hin verjüngen.

4. Mechanikbaugruppe nach Anspruch 3, **dadurch gekennzeichnet, dass** sich die breiteren Blattfedern (126, 128; 226, 228; 326, 328) zu der Aufnahme (139; 239; 339) hin in einem an die Aufnahme (139; 239; 339) angrenzenden Abschnitt (A126, A128) in ihrer Breite (126-1, 126-11; 128-1, 128-1) verjüngen und insbesondere in einem auf den angrenzenden Abschnitt folgenden, der Aufnahme (139; 239; 339) fernen Abschnitt (B126, B128) eine gleichbleibende Breite (126-III; 128-III) aufweisen.

5. Mechanikbaugruppe nach wenigstens einem der vorhergehenden Ansprüche, **dadurch gekennzeichnet, dass** das Riemengetriebe (481a, 481b) eine erste Riemenscheibe (482a, 482b), eine zweite Riemenscheibe (483a, 483b), einen Riemen (484a, 484b) und einen Mitnehmer (485a, 485b) umfasst, wobei die erste Riemenscheibe (482a, 482b) insbesondere mit einem Zahnrad (450) eines Antriebs (A445) verbunden ist.

6. Mechanikbaugruppe nach Anspruch 5, **dadurch gekennzeichnet, dass** der Antrieb (A45; A445) als Automatikantrieb ausgebildet ist, wobei eine Antriebskraft für einen Antrieb des Antriebs (A45; A445) insbesondere durch eine Gewichtskraft einer sich auf einen die Mechanikbaugruppe (2; 402) umfassenden Stuhl setzende Person erzeugbar ist und/oder wobei eine Antriebskraft für einen Antrieb des Antriebs (A45; A445) insbesondere durch die sich entspannende Blattfeder (26, 28; 426, 428) oder die sich entspannenden Blattfedern (26, 28; 426, 428) erzeugt ist, welche durch eine Gewichtskraft einer sich auf einen die Mechanikbaugruppe (2; 402) umfassenden Stuhl setzende Person vorgespannt sind.

7. Mechanikbaugruppe nach wenigstens einem der vorhergehenden Ansprüche, **dadurch gekennzeichnet, dass** die Fahrbahn (36, 37) als gewölbte Fläche (36a) ausgebildet ist, welche derart auf einen gewölbten Verlauf der jeweils zugeordneten Blattfeder (26, 28) angepasst ist, dass ein zwischen der Fahrbahn (36, 37) und einer Unterseite (26b, 28b) der Blattfeder (26, 28) ausgebildeter Bewegungsraum (R33) ein durch die Blattfeder (26, 28) ungehindertes Verfahren des Auflagers (33, 34) zwischen einer Grundstellung (G33) des Auflagers (33, 34) und einer Endstellung (E33) des Auflagers (33, 34) zulässt, sofern der hintere Schwingarm (8) frei von einer Belastung durch einen sich gegen das Rückenelement (4) zurücklehnenden Nutzer ist und dass ein jeweils in radialer Richtung zwischen der Fahrbahn (36, 37) und der zugeordneten Blattfeder (26, 28) gemessener Abstand (A3628) in dem gesamten Bewegungsraum (R33) gleichbleibend ist.

## Claims

1. A mechanical assembly (2; 402) for a chair (1),
- wherein a foot element (3), a back element (4), and a seat element (5) are articulatable on the mechanical assembly (2; 402);
- wherein the back element (4) and the seat element (5) form a seat shell (S);
- wherein the mechanical assembly (2; 402) comprises a support (6; 406), a front swing arm (7), and a rear swing arm (8; 408);
- wherein the front swing arm (7) is pivotably articulated on the support (6; 406) and can be connected to the seat element (5);
- wherein the rear swing arm (8; 408) is pivotably articulated on the support (6; 406) and can be connected to the seat shell (5);
- wherein the mechanical assembly (2; 402), in order to compensate for a body weight of a person seated, comprises at least one leaf spring;
- wherein the mechanical assembly (2; 402) furthermore comprises at least one adjustable bearing (33, 34; 433, 434), an adjustment mechanism (35; 435) for the bearing (33, 34; 433, 434) or the bearings (33, 34; 433, 434), respectively, and at least one raceway (36, 37; 436, 437) for the bearing or bearings (33, 34; 433, 434), respectively;
- wherein the leaf spring (26, 28; 426, 428) or the leaf springs (26, 28; 426, 428), respectively, by way of a first end region (26a, 28a; 426a, 428a) in each case is or are fixed, respectively, to the support (6; 406), in each case bears on the bearing (33, 34; 433, 434) or bear on the bearings (33, 34; 433, 434), respectively, outside the end region (26a, 28a; 426a, 428a), and in each case supports or support, respectively, the seat shell (S) outside the end region (26a, 28a; 426a, 428a);
- wherein the support (6; 406) can be indirectly connected to the foot element (3), wherein the mechanical assembly (2; 402) in addition to the support (6; 406) further comprises a flange (42; 442), an articulation means (43; 443), and a weighing means (44; 444), wherein the flange (42; 442) can be connected to the foot element (3), wherein the support (6; 406) by way of the articulation means (43; 443) is articulated on the flange (42; 442), wherein the support (6; 406) by way of the weighing means (44; 444) is supported on the flange (442);
- wherein the adjustment mechanism (35; 435) comprises a mechanical weighing action (45; 445) and a mechanical adjustment action (46; 446), wherein the mechanical weighing action (45; 445) drives the mechanical adjustment action (46; 446) depending on the body weight of a person seated on the seat element (5), and the bearings (33, 34; 43; 434), depending on the body weight of the person seated, are simultaneously displaced by the mechanical adjustment action (46; 446) by variable paths (W33, W34; W433, W434) along their raceway (36, 37; 436, 437) in such a manner that the seat shell (S) is supported on the support (6; 406) to a degree so as to correspond to the body weight of the person seated;
- **characterised in that** the flange (42; 442) comprises a rack (51; 451), wherein the rack (51; 451) drives a first transmission (47; 447) which acts on the first displaceable bearing (33; 433) and a second transmission (48; 448) which acts on the second displaceable bearing (34; 434), and
- **in that** either each transmission (47, 48) comprises an articulated lever (52), wherein the articulated lever (52) comprises a first leg (52a) and a second leg (52b), wherein the two legs (52a, 52b) are connected in an articulated manner, wherein the first articulated lever (52) at its free end is pivoted and the second articulated lever (52) at its free end rotatably holds a gear wheel (53) which is positioned in such a manner between a rack (54) which is connected to the support (6) and a rack (55) which is disposed on the bearing (33, 34) that rolling of the gear wheel (54) on the rack (54) which is implemented on the support (6) leads to a relative movement between the gear wheel (53) and the bearing (33, 34) **in that** the bearing (33, 34) is conveyed by the rotation and the linear movement of the gear wheel (53);
- or each transmission (433, 434) is configured as a belt transmission (481a, 481b) and comprises a first belt pulley (482a, 482b), a second belt pulley (483a, 483b), a belt (484a, 484b), and an entrainment element (485a, 485b), wherein the first bearing (433) is movable by the entrainment element (485a) of the first belt transmission (481a), and wherein the second bearing (434) is movable by the entrainment element (485b) of the second belt transmission (481b).

2. The mechanical assembly as claimed in claim 1, **characterized in that** the first and the second transmission (47, 48) have identical gear ratios, in particular reduction gearings or positive gearings, or have different gear ratios, in particular reduction gearings or positive gearings.

3. The mechanical assembly as claimed in at least one of the preceding claims, further comprising a wider leaf spring (126, 128; 226, 228; 326, 328) associated with each leaf spring (26, 28; 426, 428), **characterised in that** the wider leaf springs (126, 128; 226, 228; 326, 328) taper off towards a receptacle (139; 239; 339) in which said wider leaf springs are clamped.

4. The mechanical assembly as claimed in claim 3, **characterized in that** the wider leaf springs (126, 128; 226, 228; 326, 328) in terms of the width (126-1, 126-11; 128-1, 128-1) thereof in a portion (A126, A128) adjacent to the receptacle (139; 239; 339) taper off towards the receptacle (139; 239; 339) and in particular in a portion (B126, B128) that follows the adjacent portion and is remote from the receptacle (139; 239; 339) have a consistent width (126-III; 128-III).

5. The mechanical assembly as claimed in at least one of the preceding claims, **characterized in that** the belt transmission (481a, 481b) comprises a first belt pulley (482a, 482b), a second belt pulley (483a, 483b), a belt (484a, 484b), and an entrainment element (485a, 485b) wherein the first belt pulley (482a, 482b) is connected in particular to a gear wheel (450) of a drive (A445).

6. The mechanical assembly as claimed in claim 5, **characterized in that** the drive (A45; A445) is configured as an automatic drive, wherein a driving force for driving the drive (A45; A445) is generatable in particular by a weight of a person sitting down on a chair that comprises the mechanical assembly (2; 402), and/or wherein a driving force for driving the drive (A45; A445) is generated in particular by the relaxing leaf spring (26, 28; 426, 428) or the relaxing leaf springs (26, 28; 426, 428) which are pretensioned by a weight of a person sitting down on a chair that comprises the mechanical assembly (2; 402).

7. The mechanical assembly as claimed in at least one of the preceding claims, **characterized in that** the raceway (36, 37) is configured as a curved face (36a) which is adapted to a curved profile of the respectively assigned leaf spring (26, 28) in such a manner that a moving space (R33) that is configured between the raceway (36, 37) and a lower side (26b, 28b) of the leaf springs (26, 28) allows unimpeded displacement of the bearing (33, 34) between a basic position (G33) of the bearing (33, 34) and a terminal position (E33) of the bearing (33, 34) by the leaf spring (26, 28) as long as the rear swing arm (8) is free of stress by a user that leans back against the back element (4), **in that** a spacing (A3628) that is in each case measured in the radial direction between the raceway (36, 37) and the assigned leaf spring (26, 28) is consistent in the entire moving space (R33).

## Revendications

1. Groupe de composants mécaniques (2 ; 402) pour une chaise (1),
- où un élément de pied (3), un élément de dossier (4) et un élément d'assise (5) sont articulés contre le groupe de composants mécaniques (2 ; 402)
- où l'élément de dossier (4) et l'élément d'assise (5) forment une coque de siège (S),
- où le groupe de composants mécaniques (2 ; 402) comprend un support (6 ; 406), un bras oscillant avant (7) et un bras oscillant arrière (8 ; 408),
- où le bras oscillant avant (7) est articulé de manière pivotante au support (6 ; 406) et peut être raccordé à l'élément d'assise (5),
- où le bras oscillant arrière (8 ; 408) est articulé de manière pivotante au support (6 ; 406) et peut être raccordé à la coque de siège (5),
- où le groupe de composants mécaniques (2 ; 402) comprend au moins un ressort à lame pour la compensation du poids corporel d'une personne assise,
où le groupe de composants mécaniques (2 ; 402) comprend en outre au moins un appui réglable (33, 34 ; 433, 434), un mécanisme de réglage (35 ; 435) pour l'appui (33, 34 ; 433, 434) ou les appuis (33, 34 ; 433, 434) et au moins une voie de déplacement (36, 37 ; 436, 437) pour l'appui ou les appuis (33, 34 ; 433, 434),
- où le ressort à lame (26, 28 ; 426, 428) ou les ressorts à lame (26, 28 ; 426, 428) est/sont fixé(s) respectivement sur le support (6 ; 406) par une première partie d'extrémité (26a, 28a ; 426a, 428a), reposant respectivement sur l'appui (33, 34 ; 433, 434) ou les appuis (33, 34 ; 433, 434) en dehors de la partie d'extrémité (26a, 28a ; 426a, 428a) et soutient/soutiennent respectivement la coque de siège (S) en dehors de la partie d'extrémité (26a, 28a ; 426a, 428a),
- où le support (6 ; 406) peut être indirectement raccordé à l'élément de pied (3), où le groupe de composants mécaniques (2 ; 402) comprend une bride (42 ; 442), un moyen d'articulation (43 ; 443) et un moyen de pesée (44 ; 444) en plus du support (6 ; 406), où la bride (42 ; 442) peut être raccordée à l'élément de pied (3), où le support (6 ; 406) est articulé sur la bride (42 ; 442) par le moyen d'articulation (43 ; 443), où le support (6 ; 406) s'appuie sur la bride (442) par le moyen de pesée (44 ; 4444),
- où le mécanisme de réglage (35 ; 435) comprend un mécanisme de pesée (45 ; 445) et un mécanisme de réglage (46 ; 446), où le mécanisme de pesée (45 ; 445) entraîne le mécanisme de réglage (46 ; 446) en fonction du poids corporel d'une personne assise sur l'élément d'assise (5) et les appuis (33, 34 ; 433 ; 434) sont simultanément déplacés par le mécanisme de réglage (46 ; 446) en fonction du poids corporel de la personne assise, sur des longueurs de course (W33, W34 ; W433, W434) différentes le long de leur voie de déplacement (36, 37 ; 436, 437), de telle manière que la coque de siège (S) s'appuie sur le support (6 ; 406) avec une force correspondant au poids corporel de la personne assise, **caractérisé en ce que**
- la bride (42 ; 442) comprend une crémaillère (51 ; 451), ladite crémaillère (51 ; 451) entraînant un premier engrenage (47 ; 447) agissant sur le premier appui déplaçable (33 ; 433) et un deuxième engrenage (48 ; 448) agissant sur le deuxième appui déplaçable (34 ; 434), et **en ce que**
- soit chaque engrenage (47, 48) comprend un levier articulé (52), ledit levier articulé (52) comprenant une première branche (52a) et une deuxième branche (52b), les deux branches (52a, 52b) étant raccordées de manière articulée, le premier levier articulé (52) étant pivoté à son extrémité libre et le deuxième levier articulé (52) maintenant de manière rotative une roue dentée (53) à son extrémité libre, laquelle est positionnée entre une crémaillère (54) raccordée au support (6) et une crémaillère (55) disposée sur l'appui (33, 34) de telle manière qu'un roulement de la roue dentée (54) sur la crémaillère (54) réalisée sur le support (6) entraîne un déplacement relatif entre la roue dentée (53) et l'appui (33, 34), ledit appui (33, 34) étant transporté par la rotation et par le mouvement linéaire de la roue dentée (53),
- soit chaque engrenage (433, 434) est réalisé comme transmission à courroie (481a, 481b) et comprend une première poulie (482a, 482b), une deuxième poulie (483a, 483b), une courroie (484a, 484b) et un entraîneur (485a, 485b), le premier appui (433) étant déplaçable avec l'entraîneur (485a) de la première transmission à courroie (481a) et le deuxième appui (434) étant déplaçable avec l'entraîneur (485b) de la deuxième transmission à courroie (481b).

2. Groupe de composants mécaniques selon la revendication 1, **caractérisé en ce que** le premier et le deuxième engrenage (47, 48) présentent des rapports de transmission identiques, en particulier de démultiplication ou de multiplication, ou des rapports de transmission différents, en particulier de démultiplication ou de multiplication.

3. Groupe de composants mécaniques selon au moins l'une des revendications précédentes, comprenant en outre un ressort à lame large (126 ; 128 ; 226, 228 ; 326 ; 328) associé à chaque ressort à lame (26, 28 ; 426, 428), **caractérisé en ce que** les ressorts à lame larges (126, 128 ; 226, 228 ; 326, 328) s'amincissent dans la direction d'un logement (139 ; 239 ; 339) où ils sont serrés.

4. Groupe de composants mécaniques selon la revendication 3, **caractérisé en ce que** les ressorts à lame larges (126, 128 ; 226, 228 ; 326, 328) ont une largeur (126-1, 126-11 ; 128-1, 128-1) allant en diminuant vers le logement (139 ; 239 ; 339) dans un segment (A126, A128) adjacent au logement (139 ; 239 ; 339), et présentent en particulier une largeur (126-111 ; 128-111) constante dans un segment (B126, B128) suivant le segment adjacent et distant du logement (139 ; 239 ; 339).

5. Groupe de composants mécaniques selon au moins l'une des revendications précédentes, **caractérisé en ce que** la transmission à courroie (481a, 481b) comprend une première poulie (482a, 482b), une deuxième poulie (483a, 483b), une courroie (484a, 484b) et un entraîneur (485a, 485b), la première poulie (482a, 482b) étant en particulier raccordée à une roue dentée (450) d'un entraînement (A445).

6. Groupe de composants mécaniques selon la revendication 5, **caractérisé en ce que** l'entraînement (A45 ; A445) est réalisé comme entraînement automatique, une force d'entraînement pour la commande de l'entraînement (A45 ; A445) pouvant en particulier être générée par le poids d'une personne s'asseyant sur la chaise comprenant le groupe de composants mécaniques (2 ; 402) et/ou une force d'entraînement pour la commande de l'entraînement (A45 ; A445) étant en particulier générée par la détente du ressort à lame (26, 28 ; 426, 428) ou par la détente des ressorts à lame (26, 28 ; 426, 428) précontraints par le poids d'une personne s'asseyant sur la chaise comprenant le groupe de composants mécaniques (2 ; 402).

7. Groupe de composants mécaniques selon au moins l'une des revendications précédentes, **caractérisé en ce que** la voie de déplacement (36, 37) est réalisée comme surface cintrée (36a), ajustée à un tracé courbe du ressort à lame (26, 28) correspondant associé, de telle manière qu'un espace de déplacement (R33) formé entre la voie de déplacement (36, 37) et une face inférieure (26b, 28b) du ressort à lame (26, 28) permet un déplacement de l'appui (33, 34), non entravé par le ressort à lame (26, 28), entre une position initiale (G33) de l'appui (33, 34) et une position finale (E33) de l'appui (33, 34), si le bras oscillant arrière (8) est libre d'une contrainte exercée par un utilisateur s'appuyant contre l'élément de dossier (4) et qu'une distance (A3628) mesurée dans la direction radiale entre la voie de déplacement (36, 37) et le ressort à lame (26, 28) associé est constante dans tout l'espace de déplacement (R33).
